# EUROPEAN PATENT SPECIFICATION

(11) **EP 4 274 285 B1**
(45) Date of publication and mention of the grant of the patent: **27.05.2026**
(21) Application number: 22739838.5
(22) Date of filing: 18.01.2022
(51) Int. Cl.: H04W 12/30, H04W 12/69, H04W 12/04, H04W 4/80, H04W 12/03, H04W 12/0431, H04W 4/02, H04W 4/50

(54) **METHOD AND DEVICE FOR SECURE RANGING BASED ON ULTRA-WIDEBAND COMMUNICATION**
VERFAHREN UND VORRICHTUNG ZUR SICHEREN ENTFERNUNGSMESSUNG AUF DER BASIS VON ULTRABREITBANDKOMMUNIKATION
PROCÉDÉ ET DISPOSITIF DE TÉLÉMÉTRIE SÉCURISÉE SUR LA BASE D'UNE COMMUNICATION À BANDE ULTRA-LARGE

(30) Priority: 18.01.2021 KR 20210006864; 18.05.2021 KR 20210064354; 17.01.2022 KR 20220006809
(43) Date of publication of application: 08.11.2023
(73) Proprietor: Samsung Electronics Co., Ltd., Suwon-si, Gyeonggi-do 16677 (KR)
(72) Inventor: CHO, Sungkyu, Suwon-si, Gyeonggi-do 16677 (KR); HAN, Sehee, Suwon-si, Gyeonggi-do 16677 (KR); KEUM, Jieun, Suwon-si, Gyeonggi-do 16677 (KR)
(74) Representative: HGF
(86) International application number: PCT/KR2022/000934
(87) International publication number: WO 2022/154646

(56) References cited:
- EP-A1- 3 503 044
- CN-A- 116 724 578
- KR-A- 20220 104 652
- US-A1- 2009 143 104
- US-A1- 2019 013 937
- US-A1- 2020 082 370
- US-A1- 2020 228 331
- US-A1- 2020 336 303
- US-A1- 2020 363 524
- US-A1- 2021 014 844
- US-A1- 2022 369 103

## Description

### [Technical Field]

The disclosure relates to UWB communication and, more specifically, to a method and device for UWB-based secure ranging.

### [Background Art]

The Internet is evolving from the human-centered connection network by which humans create and consume information to the Internet of Things (IoT) network by which information is communicated and processed between things or other distributed components. Another arising technology is the Internet of Everything (IoE), which is a combination of the Big data processing technology and the IoT technology through, e.g., a connection with a cloud server. Implementing the IoT requires technical elements, such as sensing technology, a wired/wireless communication and network infrastructure, service interface and security technologies. A recent ongoing research for thing-to-thing connection is on techniques for sensor networking, machine-to-machine (M2M), or machine-type communication (MTC).

In the IoT environment may be offered intelligent Internet Technology (IT) services that collect and analyze the data generated by the things connected with one another to create human life a new value. The IoT may have various applications, such as the smart home, smart building, smart city, smart car or connected car, smart grid, health-care, or smart appliance industry, or state-of-art medical services, through convergence or integration of conventional information technology (IT) techniques and various industries.

As wireless communication systems evolve to provide various services, a need arises for a method for effectively providing such services. For example, it is possible to use a ranging technique for measuring the distance between electronic devices using ultra-wide band (UWB).

US2020/0363524 A1 discloses a method for performing distance measurement and authentication concurrently.

### [Detailed Description of the Invention]

### [Technical Problem]

The disclosure provides a method for configuring a secure component and framework for simple and efficient UWB-based secure ranging. The disclosure provides a method in which a configured secure component securely transfers a session key for secure ranging to a UWB subsystem.

The disclosure provides a method in which a UWB subsystem included in a TEE area together with a secure application efficiently and safely obtains secure data from the secure application.

### [Technical Solution]

According to an aspect of the disclosure, a method by an electronic device performing secure ranging may comprise transmitting, to a secure component, a request for configuring a ranging data set for the secure ranging by a framework of the electronic device and transmitting, to a secure component, a request for transferring the ranging data set to a UWB subsystem by the framework. The ranging data set may be transferred from the secure component to the UWB subsystem using a secure channel established between the secure component and the UWB subsystem through the framework.

According to another aspect of the disclosure, an electronic device performing security ranging may comprise a memory and a processor connected to the memory. The processor may be configured to: transmit, to a secure component, a request for configuring a ranging data set for the secure ranging by a framework of the electronic device and transmit, to a secure component, a request for transferring the ranging data set to a UWB subsystem by the framework. The ranging data set may be transferred from the secure component to the UWB subsystem using a secure channel established between the secure component and the UWB subsystem through the framework.

According to various embodiments of the disclosure, a method by a UWB device performing secure ranging may comprise receiving, from a framework, a command to fetch a ranging data set (RDS) for the secure ranging from a secure application of the UWB device by a UWB subsystem of the UWB device, establishing a secure channel with the secure application based on the command by the UWB subsystem, and receiving, from the secure application, the RDS through the established secure channel by the UWB subsystem. The UWB subsystem and the secure application may be included in a trusted execution environment (TEE) area, and the RDS may include a ranging session key used to secure a UWB ranging session.

According to various embodiments of the disclosure, a method by a UWB device performing secure ranging may comprise receiving, from a framework, a command to transfer a ranging data set (RDS) for the secure ranging to a UWB subsystem of the UWB device by a secure application of the UWB device, transmitting, to a secure OS, a request for establishing a secure channel between the secure OS of the secure application and the UWB subsystem based on the command by the secure application, and transferring the RDS to the UWB subsystem through the established secure channel by the secure application. The UWB subsystem and the secure application may be included in a trusted execution environment (TEE) area, and the RDS may include a ranging session key used to secure a UWB ranging session.

In an embodiment, the command may include at least one of the application ID of the application or the instance ID associated with one of at least one session configured by the application.

In an embodiment, a first interface for communicating with a component in the TEE area and a second interface for communicating with a component other than the TEE area may be configured for the UWB subsystem.

In an embodiment, the framework may be included outside the TEE area.

In an embodiment, the UWB subsystem may perform secure ranging with the UWB subsystem of another UWB device by using the ranging session key included in the RDS.

### [Advantageous Effects]

According to the configuration of the secure component and framework of the disclosure, simple and efficient UWB-based secure ranging may be performed. According to the method in which the secure component of the disclosure transfers the session key for secure ranging to the UWB subsystem, the session key may be safely transferred.

By the method according to an embodiment of the disclosure, the UWB subsystem included in the TEE area together with the secure application may efficiently and safely obtains secure data from the secure application.

### [Brief Description of Drawings]

FIG. 1 is a view illustrating an example layer configuration of an electronic device supporting a UWB-based service;
FIG. 2A is a view illustrating an example configuration of a communication system including an electronic device supporting a UWB-based service;
FIG. 2B is a view illustrating an example configuration of a communication system including an electronic device supporting a UWB-based payment service;
FIG. 3 is a view illustrating an example configuration of a framework included in an electronic device supporting a UWB-based service;
FIG. 4 illustrates an example operation of a communications system that performs secure ranging using a first secure component according to an embodiment of the disclosure;
FIG. 5 illustrates an example configuration and operation of an electronic device that performs secure ranging using a first secure component according to an embodiment of the disclosure;
FIG. 6 illustrates an example configuration and operation of an electronic device that performs secure ranging using a second secure component according to an embodiment of the disclosure;
FIG. 7A illustrates a method for an electronic device to establish a secure channel between a first secure component and UWBS according to an embodiment of the disclosure;
FIG. 7B illustrates a method for an electronic device to establish a secure channel between a second secure component and UWBS according to an embodiment of the disclosure;
FIG. 8 is a flowchart illustrating a method for providing an RDS by an electronic device including a second secure component according to an embodiment of the disclosure;
FIG. 9A illustrates a procedure for establishing a secure channel between a UWBS and a secure component using a symmetric encryption method according to an embodiment of the disclosure;
FIG. 9B illustrates an example procedure for establishing a secure channel between a UWBS and a secure component using an asymmetric encryption method according to an embodiment of the disclosure;
FIG. 9C illustrates another example procedure for establishing a secure channel between a UWBS and a secure component using an asymmetric method according to an embodiment of the disclosure;
FIG. 9D illustrates a procedure for a UWBS to receive an RDS from a secure component through a secure channel between the UWBS and the secure component according to an embodiment of the disclosure;
FIG. 10A illustrates a key provisioning method for an electronic device including a first secure component according to an embodiment of the disclosure;
FIG. 10B illustrates a key provisioning method for an electronic device including a second secure component according to an embodiment of the disclosure;
FIG. 11 illustrates an attestation procedure for key provisioning for an electronic device including a second secure component according to an embodiment of the disclosure;
FIG. 12 illustrates an example configuration of an electronic device according to an embodiment of the disclosure;
FIG. 13 is a flowchart illustrating a method by an electronic device according to an embodiment of the disclosure;
FIG. 14 is a view illustrating a structure of a first electronic device according to an embodiment of the disclosure;
FIG. 15 is a view illustrating a structure of a second electronic device according to an embodiment of the disclosure;
FIG. 16 illustrates an example configuration of a UWB device including an SE;
FIG. 17 illustrates operations of a UWB device including an SE;
FIG. 18 is a view illustrating an example configuration of a UWB device including a TEE according to an embodiment of the disclosure;
FIG. 19 illustrates operations of a UWB device including a TEE according to an embodiment of the disclosure;
FIG. 20 illustrates operations of a UWB device including a TEE and an SE, according to an embodiment of the disclosure;
FIG. 21 illustrates a method in which a first UWB device performs secure ranging with a second UWB device according to an embodiment of the disclosure;
FIG. 22 illustrates operations of a UWB device including a TEE according to another embodiment of the disclosure;
FIG. 23 illustrates a method in which a first UWB device performs secure ranging with a second UWB device, according to another embodiment of the disclosure;
FIG. 24 illustrates a configuration of a UWB device according to an embodiment of the disclosure;
FIG. 25 is a flowchart illustrating a method of a UWB device according to an embodiment of the disclosure;
FIG. 26 is a flowchart illustrating a method of a UWB device according to another embodiment of the disclosure; and
FIG. 27 is a view illustrating a structure of an electronic device according to an embodiment of the disclosure.

### [Mode for Carrying out the Invention]

Hereinafter, embodiments of the disclosure are described in detail with reference to the accompanying drawings.

In describing embodiments, the description of technologies that are known in the art and are not directly related to the present invention is omitted.

For the same reasons, some elements may be exaggerated or schematically shown. The size of each element does not necessarily reflects the real size of the element. The same reference numeral is used to refer to the same element throughout the drawings.

Advantages and features of the present disclosure, and methods for achieving the same may be understood through the embodiments to be described below taken in conjunction with the accompanying drawings. However, the present invention is not limited to the embodiments disclosed herein, and various changes may be made thereto. The embodiments disclosed herein are provided only to inform one of ordinary skilled in the art of the category of the present disclosure. The present invention is defined only by the appended claims. The same reference numeral denotes the same element throughout the specification.

It should be appreciated that the blocks in each flowchart and combinations of the flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, a 'unit' is not limited to software or hardware. A'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. According to embodiments of the disclosure, a "...unit" may include one or more processors.

As used herein, the term 'terminal' or 'device' may also be referred to as a mobile station (MS), user equipment (UE), user terminal (UT), terminal, wireless terminal, access terminal (AT), subscriber unit, subscriber station (SS), wireless device, wireless communication device, wireless transmit/receive unit (WTRU), mobile node, or mobile or may be referred to in other terms. Various embodiments of the terminal may include cellular phones, smart phones with wireless communication capabilities, personal digital assistants (PDAs) with wireless communication capabilities, wireless modems, portable computers with wireless communication capabilities, capturing/recording/shooting/filming devices, such as digital cameras, having wireless communication capabilities, game players with wireless communications capabilities, music storage and playback home appliances with wireless communications capabilities, Internet home appliances capable of wireless Internet access and browsing, or portable units or terminals incorporating combinations of those capabilities. Further, the terminal may include a machine to machine (M2M) terminal and a machine-type communication (MTC) terminal/device, but is not limited thereto. In the disclosure, the terminal may be referred to as an electronic device or simply as a device.

Hereinafter, the disclosure is described below with reference to the accompanying drawings. When determined to make the subject matter of the disclosure unnecessarily unclear, the detailed description of known functions or configurations may be skipped in describing embodiments of the disclosure. The terms as used herein are defined considering the functions in the present disclosure and may be replaced with other terms according to the intention or practice of the user or operator. Therefore, the terms should be defined based on the overall disclosure.

Hereinafter, embodiments of the present invention are described in detail with reference to the accompanying drawings.

When determined to make the subject matter of the present invention unclear, the detailed description of the known art or functions may be skipped. The terms as used herein are defined considering the functions in the present disclosure and may be replaced with other terms according to the intention or practice of the user or operator. Therefore, the terms should be defined based on the overall disclosure.

In general, wireless sensor network technology is largely divided into a wireless local area network (WLAN) technology and a wireless personal area network (WPAN) technology according to the recognition distance. In this case, WLAN is a technology based on IEEE 802.11 which enables access to the backbone network within a radius of about 100m. WPAN is a technology based on IEEE 802.15 which includes Bluetooth, ZigBee, and ultra-wide band (UWB). A wireless network in which such a wireless network technology is implemented may include a plurality of electronic devices.

According to the definitions by the Federal Communications Commission (FCC), UWB may refer to a wireless communication technology that uses a bandwidth of 500 MHz or more or a bandwidth corresponding to a center frequency of 20% or more. UWB may mean a band itself to which UWB communication is applied. UWB may enable secure and accurate ranging between devices.

Operations of a UWB-based service may include a service initiation step for initiating the UWB-based service, a key provisioning step for providing a key for security, a discovery step for discovering a device, a connection step including secure channel creation and parameter exchange, and/or a UWB ranging step for measuring a position/distance between devices.

Meanwhile, according to an embodiment, some steps may be omitted. For example, in an embodiment, the service initiation step and the UWB ranging step may be mandatory steps, but the key provisioning step, discovery step, and connection step may be optional steps. As another example, in another embodiment, the service initiation step, the key provisioning step, and the UWB ranging step may be mandatory steps, but the discovery step and connection step may be optional steps.

The terminology used herein is provided for a better understanding of the disclosure.

"Application dedicated file (ADF)" may be, e.g., a data structure that may host an application or application specific data.

"Application protocol data unit (APDU)" may be a command and a response used when communicating with a secure element (SE) (e.g., embedded SE) or application data structure.

"Application specific data" may be, e.g., an applet, a proprietary applet, or an equivalent implementation within a ranging device.

"Controller" may be a ranging device that defines and controls ranging control messages (RCM). In the disclosure, the ranging device may be, e.g., an enhanced ranging device (ERDEV) as defined in the IEEE Std 802.15.4z standard.

"Controlee" may be a ranging device using a ranging parameter in the RCM received from the controller.

"Dynamic STS" may be an operation mode in which the STS is confidential and never repeated during a ranging session. The STS may be managed by the secure component in this mode.

"Applet" may be an applet that implements an APDU interface running on a secure component and is identified by a well-defined application (applet) ID (AID). This applet may host the data needed for secure ranging. In an embodiment, the applet may be, e.g., a FiRa applet as defined in the FIRA CONSORTIUM COMMON SERVICE & MANAGEMENT LAYER (CSML) specifications.

"Ranging device" is a ranging device that may communicate with another ranging device using a pre-defined profile (e.g., a set of configuration parameters related to UWB and OOB used in the UWB-enabled door lock service) or a ranging device capable of supporting a pre-defined UWB ranging service for performing a ranging session with another ranging device. In this disclosure, the ranging device may be referred to as a UWB device or a UWB ranging device. In an embodiment, the ranging device may be, e.g., a FiRa device as defined in the FIRA CONSORTIUM CSML specification.

"Ranging data set (RDS)" may be data required to establish a UWB session whose confidentiality, authenticity, and integrity need to be protected. As an embodiment, the RDS may include a UWB session key. As an embodiment, the RDS may be used for secure ranging. For example, the RDS may be used to generate an STS for secure ranging.

"UWB-enabled application" may be an application using a Framework API for configuring an OOB Connector, a Secure Service, and/or a UWB service for a UWB session. In this disclosure, "UWB-enabled Application" may be abbreviated as an application. In an embodiment, the UWB-enabled application may be, e.g., a FiRa-enabled application defined in the FIRA CONSORTIUM CSML specification.

"Framework" may be, e.g., a collection of logical software components including an OOB connector, secure Service, and/or UWB service. In an embodiment, the framework may be, e.g., FiRa Framework as defined in the FIRA CONSORTIUM CSML specification.

"OOB Connector" may be a software component for establishing out-of-band (OOB) communication (e.g., BLE communication) between ranging devices. In an embodiment, the OOB connector may be, e.g., a FiRa OOB connector as defined in the FIRA CONSORTIUM CSML specification.

"Profile" may be a previously defined set of UWB and OOB configuration parameters. In an embodiment, the profile may be, e.g., a FiRa profile as defined in the FIRA CONSORTIUM CSML specification.

"Profile manager" may implement a profile available on the ranging device. In an embodiment, the profile manager may be, e.g., a FiRa profile manager as defined in the FIRA CONSORTIUM CSML specification.

"Smart ranging device" may be a ranging device (e.g., physical access reader) capable of hosting one or more UWB-enabled applications and implementing the framework or a ranging device that implements a specific screen application provided by the manufacturer. The smart ranging device may be a ranging device capable of installing multiple UWB-enabled applications to support a UWB ranging-based service to perform a ranging session with another ranging device or smart ranging device. In an embodiment, the smart ranging device may be, e.g., a FiRa smart device as defined in the FIRA CONSORTIUM CSML specification.

"Global Dedicated File (GDF)" may be a root level of application specific data including data required to establish a USB session. The application specific data may be, e.g., an applet, a proprietary applet, or an equivalent implementation within a ranging device.

"Framework API" may be an API used by a UWB-enabled Application to communicate with the Framework.

"Initiator" may be a Ranging Device that initiates a ranging exchange.

"Object identifier (OID)" may be an identifier of the ADF in the application data structure or a unique ID for identifying a service provider SP.

"Out-of-band (OOB)" may be data communication that does not use UWB as an underlying wireless technology.

"Responder" may be a ranging device that responds to the Initiator in a ranging exchange.

"Scrambled timestamp sequence (STS)" may be a ciphered sequence for increasing the integrity and accuracy of ranging measurement timestamps.

"Secure channel" may be a data channel that prevents overhearing and tampering.

"Secure component" may be a component that interfaces with UWBS for the purpose of providing RDS to UWBS, e.g., when dynamic STS is used. It may also host UWB-enabled application data.

"Secure element (SE)" may be a tamper-resistant secure hardware component that may be used as a Secure Component in the Ranging Device.

"Secure service" may be a component for interfacing with the secure component of the system, such as trusted execution environment (TEE) or secure element.

"Static STS" is an operation mode in which STS is repeated during a session, and does not need to be managed by the secure component.

"SUS applet" may be an applet on the secure component operating as an end point for the secure channel between secure components, such as UWBS and SE.

"UWB Service" may be an implementation-specific software component that provides access to the UWBS.

It may be considered that the "UWB session" is established when the controller and controlee(s) may start UWB ranging. The UWB session may be a period from when the controller and the controlee start communication through UWB until the communication stops. A UWB Session may include ranging, data transfer, or both ranging and data transfer.

"UWB session ID" may be an ID (e.g., an integer) for identifying the UWB session.

"UWB session key" may be a key used to protect the UWB Session. In this disclosure, the UWB session key may be a UWB ranging session key (URSK), and may be denoted as a session key.

"UWB Subsystem (UWBS)" may be a hardware component implementing the UWB PHY and MAC specifications. The UWBS may have an interface to the FiRa framework where the UCI logical interface layer has been implemented and an interface for the secure component to search for the RDS. In an embodiment, the UWB PHY and MAC specifications may be, e.g., the FiRa CONSORTIUM PHY and MAC specifications.

When determined to make the subject matter of the present invention unnecessarily unclear, the detailed description of related known functions or features may be skipped in describing the disclosure.

Hereinafter, various embodiments of the disclosure are described with reference to the accompanying drawings.

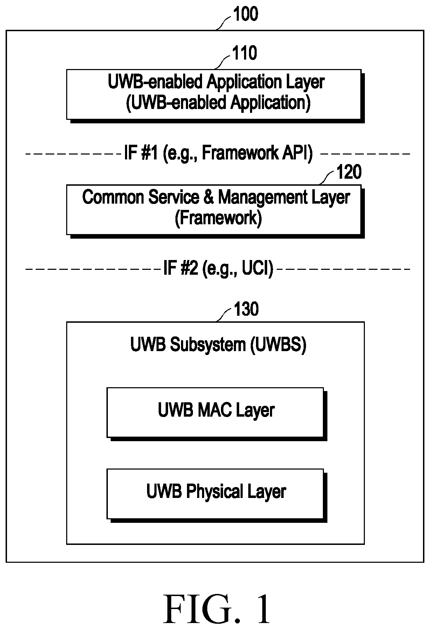

FIG. 1 is a view illustrating an example layer configuration of an electronic device supporting a UWB-based service.

The electronic device (UWB device) 100 of FIG. 1 may be, e.g., a smart ranging device or a ranging device. As an embodiment, the smart ranging device or ranging device may be an enhanced ranging device (ERDEV) defined in IEEE 802.15.4z or a FiRa device defined by the FiRa Consortium. In FIG. 1, the electronic device may be referred to as a UWB device.

In the embodiment of FIG. 1, the UWB device 100 may interact with other UWB devices through a UWB session.

Referring to FIG. 1, the electronic device 100 may include a UWB-enabled application layer (UWB-enabled application) 110, a common service & management layer (Framework) 120, and/or a UWB subsystem (UWBS) 130 including a UWB MAC layer and a UWB physical layer. Depending on the embodiment, some entities may not be included in the electronic device, or additional entities (e.g., secure layer) may be further included.

The electronic device 100 may implement a first interface (Interface (IF) #1) that is an interface between the UWB-enabled Application 110 and the Framework 120, and the first interface allows the UWB-enabled application 110 on the electronic device 100 to use the UWB capabilities of the electronic device 100 in a predetermined manner. In an embodiment, the first interface may be, e.g., framework API, but is not limited thereto.

The electronic device 100 may implement a second interface (Interface (IF) #2) that is an interface between the Framework 120 and the UWBS 130. In an embodiment, the second interface may be, e.g., a UWB Command Interface (UCI), but is not limited thereto.

The UWB-enabled application layer 110 may be a layer of an application (e.g., FiRa-enabled application) using the first interface (e.g., the framework API) to constitute an OOB connector, secure service, and UWB service for, e.g., a UWB session.

The UWB-enabled Application 110 may trigger establishment of a UWB session by a UWBS 130 through the first interface. The UWB-enabled Application 110 may use one of previously defined profiles (profile). For example, the UWB-enabled Application 110 may use one of the profiles defined in FiRa or a custom profile. The UWB-enabled Application 110 may use the first interface to handle related events, such as service discovery, ranging notifications, and/or error conditions.

The common service & management layer (Framework) 120 may define a common component and procedure necessary to implement, e.g., UWB secure ranging.

The Framework 120 may provide access to Profiles, individual-UWB configuration and/or notifications. The Framework 120 may support at least one of a function for UWB ranging and transaction execution, a function to provide an interface to the application and UWBS 130, or a function to estimate the location of the device 100. The Framework 120 may be a set of software components. As described above, the UWB-enabled Application 110 may interface with the Framework 120 through the first interface, and the Framework 120 may interface with the UWBS 130 through the second interface.

Meanwhile, in the disclosure, the UWB-enabled Application 110 and/or Framework 120 may be implemented by an application processor (AP) (or processor). Accordingly, in the disclosure, the operation of the UWB-enabled Application 110 and/or the Framework 120 may be understood as performed by an AP (or a processor).

The UWB MAC layer and the UWB physical layer may be collectively referred to as a UWB subsystem (UWBS) 130. The UWBS 130 may be based on the FiRa PHY and MAC specifications referencing, e.g., the IEEE 802.15.4z specifications.

The UWBS 130 may be a hardware component including a UWB MAC Layer and a UWB Physical Layer. The UWBS 130 may perform UWB session management and may communicate with the UWBS of another UWB device. The UWBS 130 may interface with the Framework 120 through the second interface and may obtain the secure data from the Secure Component. In an embodiment, the Framework (or application processor) 120 may transmit a command to the UWBS 130 through UCI, and the UWBS 130 may transmit a response to the command to the Framework 120. The UWBS 130 may transfer a notification to the Framework 120 through the UCI.

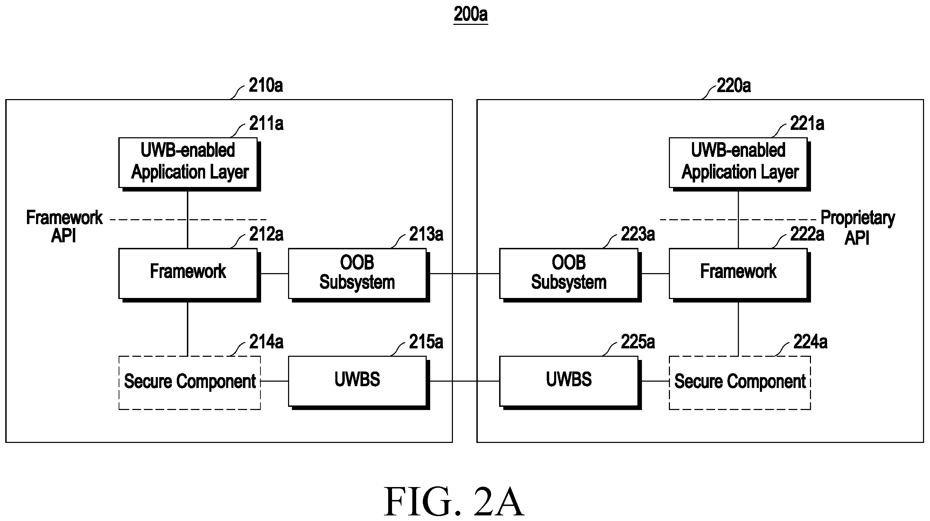

FIG. 2A is a view illustrating an example configuration of a communication system including an electronic device supporting a UWB-based service.

Referring to FIG. 2A, the communication system 200a includes a first electronic device 210a and a second electronic device 220a.

In an embodiment, the first UWB device 210a and the second UWB device 220a may be, e.g., the UWB device of FIG. 1 or an electronic device including the UWB device of FIG. 1. For example, the first electronic device (first UWB device) 210a may be, e.g., a smart ranging device or ranging device, and the second electronic device (second UWB device) 220a may be, e.g., a smart ranging device or ranging device. As an embodiment, the smart ranging device or ranging device may be an enhanced ranging device (ERDEV) defined in IEEE 802.15.4z or a FiRa device defined by the FiRa Consortium. In FIG. 2A, the first electronic device may be referred to as a first UWB device, and the second electronic device may be referred to as a second UWB device.

The first electronic device 210a may host, e.g., one or more UWB-enabled applications, which may be installed by the user (e.g., a mobile phone). It may be based on the framework API. The second electronic device 220a does not provide a framework API, and for example, may use a proprietary interface to implement a specific UWB-enabled application provided only by the manufacturer. Unlike shown, according to an embodiment, both the first UWB device and the second UWB device may be Ranging Devices using the Framework API, or both the first UWB device and the second UWB device may be Ranging Devices using the proprietary interface.

The first electronic device 210a and the second electronic device 220a may include UWB-enabled application layers (UWB-enabled applications) 211a and 221a, frameworks 212a and 222a, OOB components (OOB subsystems) 213a and 223a, secure components 214a and 224a, and/or UWBS 215a and 225a, respectively. According to an embodiment, some components may be omitted, and an additional component may further be included.

The first electronic device 210a and the second electronic device 220a may generate an OOB connection (channel) through the OOB connectors 213a and 223a and generate a UWB connection (channel) through the UWBSs 215a and 225a and communicate with each other.

The frameworks 212a and 222a may serve to provide access to profiles, individual-UWB settings, and/or notifications. The frameworks 212a and 222a may be a set of software components, and may include, e.g., profile manager, OOB connector, secure Service, and/or UWB service.

The OOB components 213a and 223a may be hardware components including a MAC layer and/or a physical layer for OOB communication (e.g., BLE communication). The OOB components 213a and 223a may communicate with OOB components of other devices. In an embodiment, the first UWB device 210a and the second UWB device 220a may create an OOB connection (channel) using the OOB components 213a and 223a and exchange parameters for establishing a UWB session through the OOB channel. In this disclosure, the OOB components 213a and 223a may be referred to as OOB subsystems.

The secure components 214a and 224a may be hardware components that interface with the framework and/or UWBS to provide RDS. As an embodiment, the secure components 214a and 224a may be an SE (e.g., eSE), a TEE (or a trusted application (TA) within the TEE), or a strongbox (SB).

The UWBS 215a and 225a may be a hardware component including a UWB MAC Layer and a UWB Physical Layer. The UWBS 215a and 225a may perform UWB session management and may communicate with the UWBS of another UWB device. In an embodiment, the first UWB device 210a and the second UWB device 220a may perform transaction of service data and UWB ranging through the UWB session established through the UWBSs 215a and 225a using the exchanged parameters.

In the disclosure, the UWB-enabled Application Layers and/or the Frameworks may be implemented by an application processor (AP) (or processor). Accordingly, in the disclosure, it may be understood that the operations of the UWB-enabled Application Layers and/or the Frameworks are performed by an AP (or a processor).

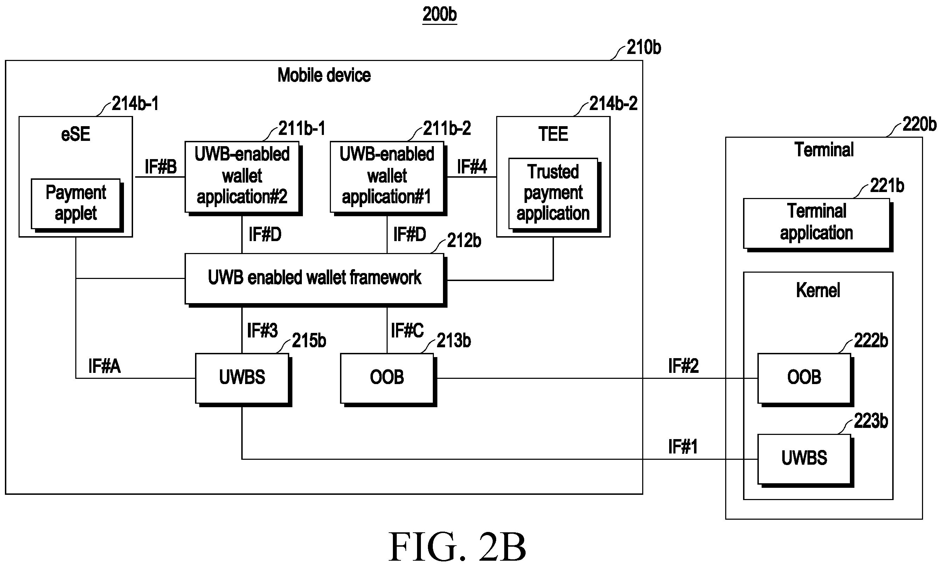

FIG. 2B is a view illustrating an example configuration of a communication system including an electronic device supporting a UWB-based payment service.

The embodiment of FIG. 2B may be an example of the embodiment of FIG. 2A.

Referring to FIG. 2B, a communication system 200b providing a UWB-based payment service may include a first electronic device (first UWB device) 210b and a second electronic device (second UWB device) 220b. In FIG. 2B, the first electronic device may be referred to as a first UWB device, and the second electronic device may be referred to as a second UWB device.

The first electronic device 210b may be the user's electronic device (e.g., the user's mobile device) for a UWB-based payment service. The first electronic device 210b may include at least one UWB enabled wallet application (UWB enabled application) 211b-1 and 211b-2, a UWB enabled wallet framework (framework) 212b, an OOB component 213b, at least one secure component 214b-1 and 214b-2, and/or a UWBS 215b. The description of each component may refer to the description of FIG. 2A.

Meanwhile, in the embodiment of FIG. 2B, for convenience of description, it is described that the UWB enabled application corresponds to the UWB enabled wallet application and the framework corresponds to the UWB enabled wallet framework, but embodiments are not limited thereto, and various UWB enabled applications and frameworks for providing various types of other services may be implemented. In FIG. 2B, the UWB enabled wallet application may be referred to as a UWB enabled application, and the UWB enabled wallet framework may be referred to as a framework.

The UWB enabled applications 211b-1 and 211b-2 may support at least one of the following features.
hosts applet for UWB-based payment in SE (e.g., eSE) or trusted payment (trusted payment application) for UWB-based payment in TEE
if requested by the framework, provides arrangement information about anchors for estimating the location of the first electronic device and a UWB block structure (e.g., ranging block structure)
communication with second electronic device and backend server for personalization of payment applet or trusted payment application (TPA)

The framework 212b may support at least one of the following features.
estimates the location of the first electronic device
implements UCI commands
provides a set of APIs for the UWB enabled application to access UWBS and OOB components

The OOB component 213b may support the following features.
implements OOB connection operation (e.g., BLE connection operation)

The trusted payment application 214b-2 may be included in the TEE and may support at least one of the following features.
supports TEE client API
implements trusted application
implements the secure channel protocol to communicate with the second electronic device in a secure manner
hosts payment credentials and cryptographic keys for secure channels
hosts important information (e.g., card information) for supporting UWB-based payment service

The payment applet 214b-1 may be included in the SE (eSE) and may support at least one of the following features.
supports APDU
implements the secure channel protocol to communicate with the second electronic device in a secure manner
hosts payment credentials and cryptographic keys for security channels
hosts important information (e.g., card information) for supporting UWB-based payment service

Each component of the first electronic device 210b may communicate with another component through a predefined interface IF. Hereinafter, each interface is described.

IF#1: An interface between the UWBS 215b of the first electronic device 210b and the UWBS (e.g., the UWBS 223b of the second electronic device 220b) of another electronic device. IF#1 may be used to exchange UWB messages and/or payment transactions.

IF#2: An interface between the OOB component 213b of the first electronic device 210b and an OOB component (e.g., the OOB component 222b of the second electronic device 220b) of another electronic device. IF#2 may be used to exchange OOB messages.

IF#3: An interface between framework 212b and UWBS 215b. IF#3 may be used to exchange UCI messages. For example, IF#3 may be used to exchange a UCI message for establishing a secure channel between the trusted payment application 214b-2 and the UWBS 215b.

IF#4: An interface between UWB enabled application 211b-2 and trusted payment application 214b-2 in TEE. IF#4 may be used to exchange TEE commands through the TEE Client API. For example, IF#4 may be used to exchange TEE commands for establishing a secure channel between the trusted payment application 214b-2 and the UWBS 215b.

IF#A: An interface between payment applet 214b-1 in SE (eSE) and UWBS 215b. IF#A may be, e.g., a SUS external API.

IF#B: An interface between UWB enabled application 211b-1 and payment applet 214b-1 in SE (eSE). IF#B may be used to exchange APDUs through OMAPI. For example, IF#B may be used to exchange an APDU for establishing a secure channel between eSE and UWBS.

IF#C: An interface between OOB component 213b and framework 212b or UWB enabled applications 211b-1 and 211b-2.

IF#D: An interface between UWB enabled applications 211b-1 and 211b-2 and framework 212b. IF#D may be a framework API (API) provided by the framework 212b.

The second electronic device 220b may be an electronic device (e.g., a point of service (PoS) terminal of retail) of an operator for a UWB-based payment service. The second electronic device 220b may include a terminal application 221b, an OOB component 222b, and/or a UWBS 223b. As an embodiment, the terminal application 221b may be a UWB enabled application.

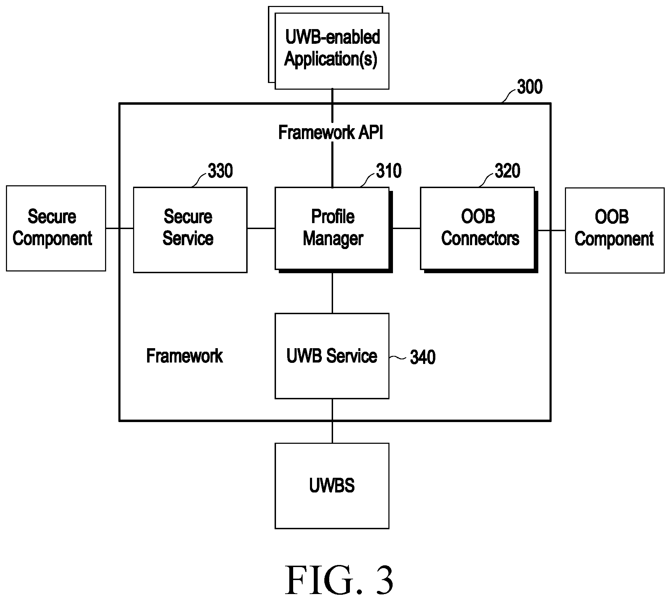

FIG. 3 is a view illustrating an example configuration of a framework included in an electronic device supporting a UWB-based service.

The framework 300 of FIG. 3 may be an example of the frameworks of FIGS. 2A and 2B. The framework 300 of FIG. 3 may be a FiRa framework as defined in, e.g., the FIRA CONSORTIUM.

The framework 300 may be a set of logical software components. The UWB-enabled application may interface with the framework 300 through the framework API provided by the framework.

Referring to FIG. 3, the framework 300 may include a profile manager 310, an OOB connector 320, a secure service 330, and/or a UWB service 340. According to an embodiment, some components may be omitted, and an additional component may further be included.

The profile manager 310 may manage a profile(s) available on the ranging device (UWB device). The profile may be a set of parameters required to establish a successful UWB session between ranging devices (UWB devices). For example, a profile may include a parameter indicating which secure channel (e.g., OOB secure channel) is used, a UWB/OOB configuration parameter, a parameter indicating whether the use of a particular secure component is mandatory, and/or a parameter related to the file structure of the ADF. The profile manager 310 may abstract the UWB and OOB configuration parameters from the UWB-enabled application.

The OOB connector 320 may be a component for establishing an OOB connection between ranging devices (UWB devices). The OOB connector 320 may handle the discovery phase and connection phase for providing a UWB-based service.

The secure service 330 may serve to interface with a secure component, such as a secure element (SE) or trusted execution environment (TEE). The secure component may be a component that interfaces with the UWBS to transfer UWB ranging data to the UWBS.

The UWB service 340 may be a component that provides access to the UWBS.

As described above, a UWB enabled application, such as a UWB enabled wallet application may interact with the framework to use UWBS and OOB through the API provided by the framework. Further, the UWB enabled application may be associated with at least one secure component that stores credentials, cryptographic keys, and other sensitive information. For example, the UWB enabled application may have an eSE (or applet in the eSE) (a first secure component) and/or a TEE (or trusted application (TA) in the TEE) (a second secure component) as secure components.

Meanwhile, the TA in the TEE may directly or indirectly interact with the UWBS.

If the UWBS is connected to the TA through an intermediate entity (e.g., framework), the UWBS may indirectly communicate with the TA. This mode may be referred to as a bypass mode.

If the UWBS is physically connected to the driver TA (secure OS) in the TEE, the UWBS may directly communicate with the TA. This mode may be referred to as an attached mode. In the attached mode, it may be understood that UWBS is included in the TEE region.

### <Embodiment A>

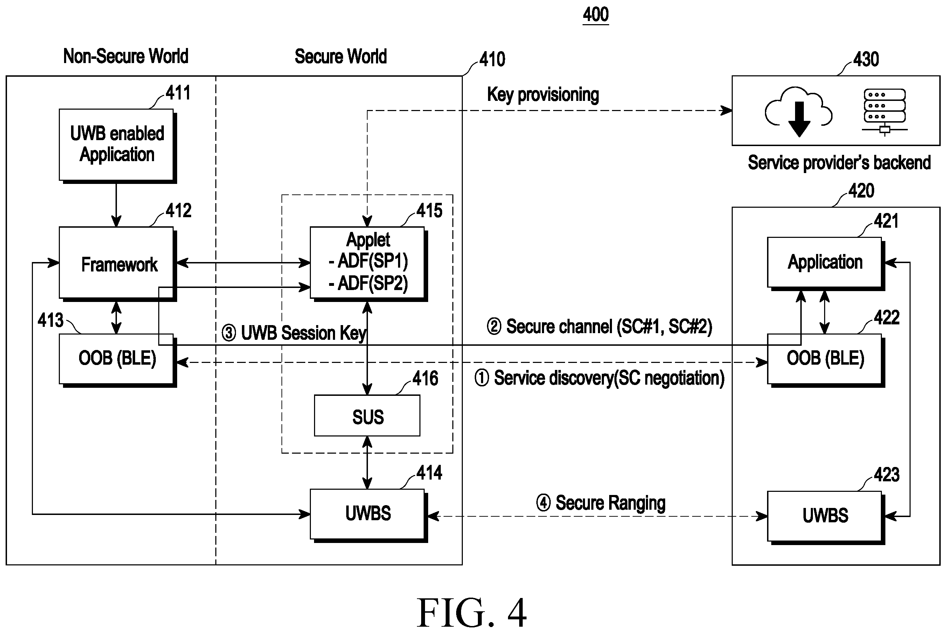

Embodiment A corresponds to an embodiment related to the bypass mode described above. Hereinafter, embodiment A is exemplarily described with reference to FIGS. 4 to 15.

FIG. 4 illustrates an example operation of a communications system that performs secure ranging using a first secure component according to an embodiment of the disclosure.

In the embodiment of FIG. 4, the first secure component may be a secure element (e.g., embedded SE (eSE)). The SE is a safe secure module based on tamper resistant characteristics and, if no contract relationship is established between various entities, installation and driving of an application are limited.

The eSE means a fixed SE fixed and used in the electronic device. The eSE is typically manufactured exclusively for the manufacturer at the request of the terminal manufacturer, and may be manufactured including the operating system and framework. For the eSE, a service control module in the form of an applet may be remotely downloaded and installed and be used for various secure services, such as e-wallet, ticketing, e-passport, or digital key.

In the disclosure, the first secure component is distinguished from the second secure component, which is a secure component, such as a TEE (or TA within the TEE) or Strongbox.

The TEE may be an S/W-centered secure environment that creates a virtual separated environment based on, e.g., a code supported by a specific chipset (e.g., ARM-based). The TEE has tamper resistant characteristics but has the advantages of large available memory, high speed, and low costs as compared with the SE. Further, since various service providers are immediately available within a range allowed by the mobile manufacturer, the TEE has the advantage of low complexity between entities as compared with the SE.

Strongbox may be a physical secure chip based on Javacard OS, for example. Strongbox, like TEE, also has the advantage of low complexity between entities compared to SE.

Meanwhile, the second secure component is not limited to the aforementioned TEE or Strongbox, and may be a secure component having the same or similar characteristics as the TEE or Strongbox.

As is described below, when the first secure component is used and the second secure component is used, there is a difference in a key provisioning procedure, a procedure for transferring a session key for secure ranging to UWBS, and the like.

Referring to FIG. 4, the communication system 400 includes a first electronic device 410, a second electronic device 420, and/or a service provider 430.

In the embodiment of FIG. 4, the first electronic device (the first UWB device) 410 and the second electronic device (the second UWB device) 420 may be one of the electronic devices described above with reference to FIGS. 1 to 3. For example, the first electronic device (the first UWB device) 410 may be, e.g., a smart ranging device, and the second electronic device (the second UWB device) 420 may be, e.g., a ranging device or a smart ranging device.

The service provider 430 may be an entity that provides the UWB-enabled application and plays a role to provision a key for secure ranging.

Referring to FIG. 4, the first electronic device 410 may include a UWB-enabled application 411, a framework 412, and an OOB component 413 belonging to a non-secure world, and may include a secure element SE (a first secure component) and a UWBS 414 belonging to a secure world. The second electronic device 420 may include an application 421, an OOB component 422, and/or a UWBS 423.

The UWB-enabled application 411 may require UWB functions and may access the UWBS 414 through the framework 412.

The framework 412 provides access to different profiles. As illustrated in FIG. 3, the framework 412 may include a profile manager, an OOB connector, a secure service, and/or a UWB service component.

The SE (e.g., eSE) may include an applet 415 and/or a secure UWB service (SUS) applet 416. The applet 415 may include at least one application dedicated file (ADF) required to safely generate the ranging data set (RDS). For example, as illustrated, the applet 415 may include each ADF (e.g., the ADF (ADF(SP1)) of SP1 and the ADF (ADF(SP2)) of SP2) provided by each service provider SP. The ADF may be provided by the service provider, e.g., in the key provisioning step. Also, the applet 415 may transmit the RDS to the UWBS 414 through the SUS applet 416. In an embodiment, the RDS may include a session ID and/or a UWB session key for a specific UWB session.

The OOB component 413 may be connected to the OOB connector of the framework 412, and may establish an OOB connection (e.g., Bluetooth low energy (BLE) connection) between ranging devices (UWB devices). For example, the OOB connection between the first electronic device 410 and the second electronic device 420 may be established through the OOB component 413 of the first electronic device 410 and the OOB component 422 of the second electronic device 420.

The UWBS 414 manages UWB hardware. The UWBS 414 may perform a UWB session with the UWBS (e.g., the UWBS 423 of the second electronic device 420) of another ranging device. The UWBS 414 may be managed by the framework 412 and may receive an RDS required for secure ranging from the SE.

Referring to FIG. 4, in operation 1 (discovery operation), the first electronic device 410 and the second electronic device 420 may perform a service discovery procedure through the OOB components 413 and 422. The service discovery procedure may include a secure channel (SC) negotiation operation.

In operation 2 (secure channel configuration operation), the first electronic device 410 and the second electronic device 420 may configure a secure channel (e.g., SC#1 and SC#2) between devices through a framework in order to safely share data between electronic devices (e.g., FiRa devices). The secure channel may be open through an OOB channel (connection).

In operation 3 (RDS generation/transfer operation), the UWB session key URSK may be exchanged between the applet 415 and the SUS applet 416. For example, the UWB ranging session key (URSK) of the applet 415 may be transmitted to the SUS applet 416 through communication with the SUS applet 416. Further, the session ID may be transmitted to the UWBS 414 through the SUS applet 416. To this end, a secure channel between the applet 415 and the SUS applet 416 and a secure channel between the SUS applet 416 and the UWBS 414 may be established first. The UWBS 414 may obtain the corresponding RDS from the SUS applet 416 through the configured secure channel. The session ID and the UWB session key may be generated by applet 415.

In operation 4 (secure ranging operation), the first electronic device 410 and the second electronic device 420 may perform a secure ranging procedure through the UWBS 414 and 423. The obtained URSK may be used by UWBS for secure ranging.

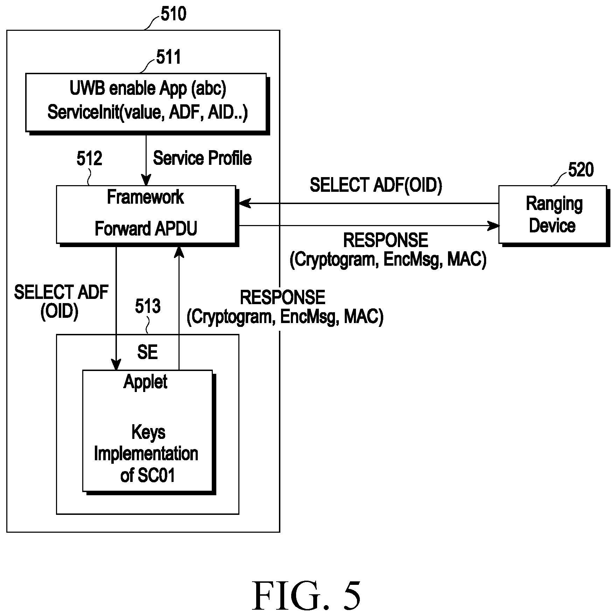

FIG. 5 illustrates an example configuration and operation of an electronic device that performs secure ranging using a first secure component according to an embodiment of the disclosure.

In the embodiment of FIG. 5, the electronic device (UWB device) 510 may be one of the electronic devices described above with reference to FIGS. 1 to 3. For example, the electronic device 510 may be, e.g., a smart ranging device, and the first secure component may be a secure element (e.g., eSE).

Referring to FIG. 5, an electronic device 510 may include a UWB-enabled application 511, a framework 512, and a first secure component 513, and may communicate with an external electronic device 520.

In the embodiment of FIG. 5, the framework 512 may communicate with another ranging device and the first secure component 513 through an APDU interface. The APDU interface is based, e.g., on ISO/IEC 7816-4. For example, the framework 512 of the electronic device 510 may receive an APDU command (SELECT ADF (OID)) for selecting the ADF identified by the OID from the external ranging device (e.g., FiRa device) 520, and may transmit the received APDU command to the first secure component 513. Further, the framework 512 may receive a response to the APDU command from the first secure component 513 and transmit the received response to an external ranging device (e.g., a FiRa device) 520. The response may include a cryptogram, an encrypted message EncMsg, and/or a message authentication code MAC.

Meanwhile, the APDU interface may be invoked only by the framework 512 and may not be invoked by the application 511. Accordingly, when the APDU interface is used, the UWB-enabled application 511 may merely serve to provide the service profile to the framework 512 using, e.g., the serviceInit() API. In other words, the UWB-enabled application 511 may not be actively operated.

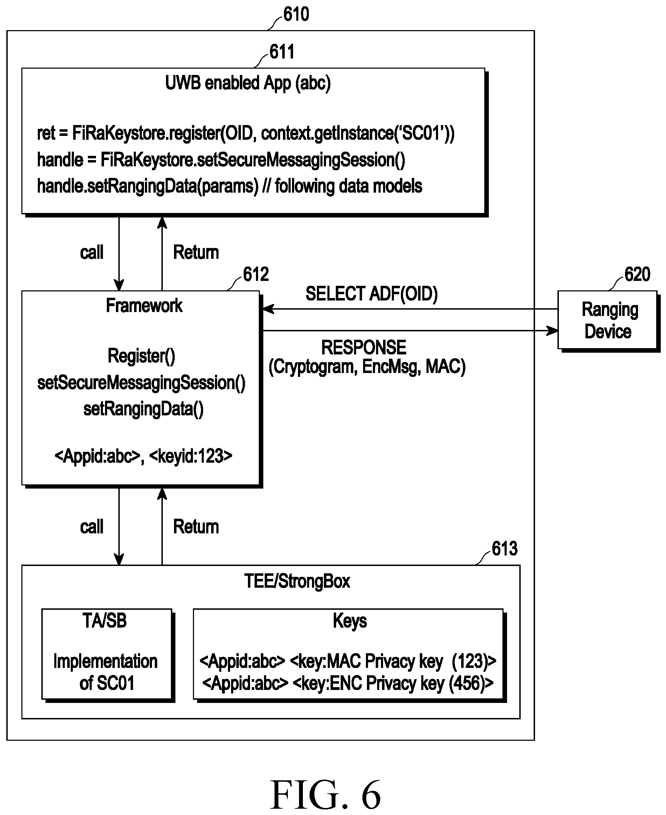

FIG. 6 illustrates an example configuration and operation of an electronic device that performs secure ranging using a second secure component according to an embodiment of the disclosure.

In the embodiment of FIG. 6, the electronic device (UWB device) 610 may be one of the electronic devices described above with reference to FIGS. 1 to 3. For example, the electronic device 610 may be, e.g., a smart ranging device, and the second secure component may be a TEE or a Strongbox (SB).

Referring to FIG. 6, the electronic device 610 may include a UWB-enabled application 611, a framework 612, and a second secure component 613, and may communicate with an external electronic device 620.

In an embodiment, the second secure component 613 may include, e.g., a function of implementing the secure channel 1 SC01 and/or a function of implementing a key. For example, the second secure component 613 may include a MAC privacy key (e.g., a MAC privacy key having 123 as a key value) corresponding to an application (e.g., an application having abc as an Appid) and/or an ENC privacy key (e.g., an ENC privacy key having 456 as a key value) corresponding to an application (e.g., an application having abc as an Appid). In an embodiment, the MAC privacy key may be used to generate a message authentication code, and the ENC privacy key may be used for encryption. Such a secure channel key may be provided by a service provider, e.g., in the key provisioning step. The key provisioning step may be performed before the discovery step.

In the embodiment of FIG. 6, the framework 612 may communicate with the second secure component (TEE/SB) 613 through a set of framework APIs, rather than an APDU interface. In an embodiment, the framework API set may include, e.g., an API such as a register () for registering an application, a setsecureMessagingSession () for configuring a secure messaging session, and/or a setRangingData () for configuring ranging data (or RDS).

Unlike the embodiment of FIG. 5 using the APDU interface, this framework API may be invoked by the application 611. Accordingly, when this framework API is used, the framework 612 may be responsible for logic, and the UWB-enabled application 611 may implement various services (e.g., FiRa services) together with detailed parameter setting for secure ranging using the API, and provide data related thereto to the framework. Accordingly, the embodiment of FIG. 6 is advantageous in terms of maintenance and reliability of the application by the service provider compared to the embodiment of FIG. 5.

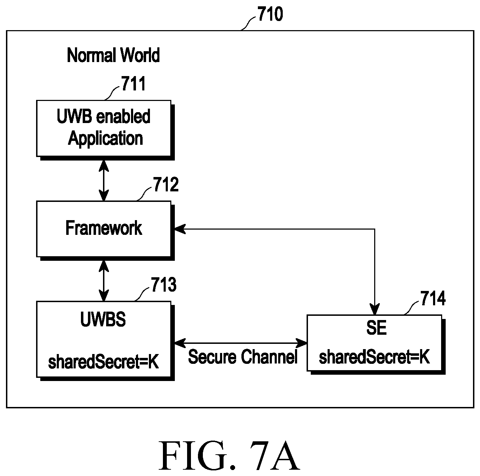

FIG. 7A illustrates a method for an electronic device to establish a secure channel between a first secure component and UWBS according to an embodiment of the disclosure.

In the embodiment of FIG. 7A, the electronic device 710 may be, e.g., an electronic device having the configuration of FIG. 5, and the first secure component may be an SE (e.g., an eSE).

Referring to FIG. 7A, the electronic device 710 may include a UWB-enabled application 711, a framework 712, a UWBS 713, and a first secure component 714.

In the embodiment of FIG. 7A, the secure channel is directly configured between the UWBS 713 and the first secure component 714 by the APDU interface. As illustrated, the secure channel is a symmetric key-based secure channel in which the UWBS 713 and the first secure component 714 share the same shared key (e.g., the shared secret key ("sharedSecret=K")).

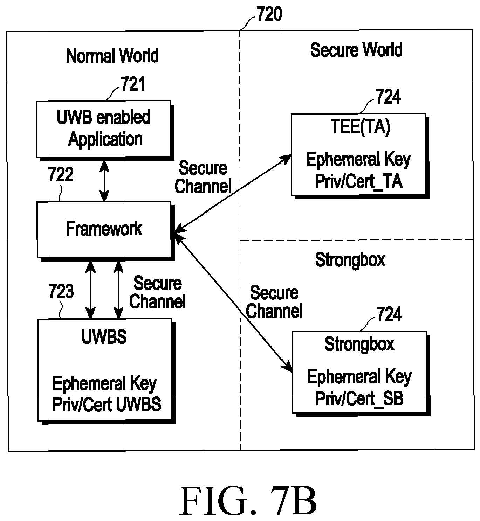

FIG. 7B illustrates a method for an electronic device to establish a secure channel between a second secure component and UWBS according to an embodiment of the disclosure.

In the embodiment of FIG. 7B, the electronic device 720 may be, e.g., an electronic device having the configuration of FIG. 6, and the second secure component may be TEE and/or SB.

Referring to FIG. 7B, the electronic device 720 may include a UWB-enabled application 721, a framework 722, a UWBS 723, and a second secure component 724. The second secure component 724 may be a TEE or a Strongbox, and the TEE may include a TA.

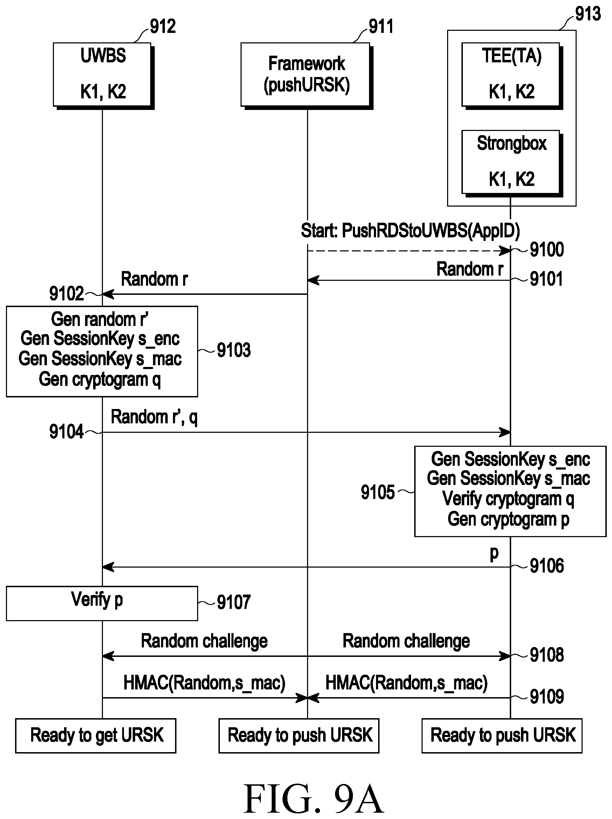

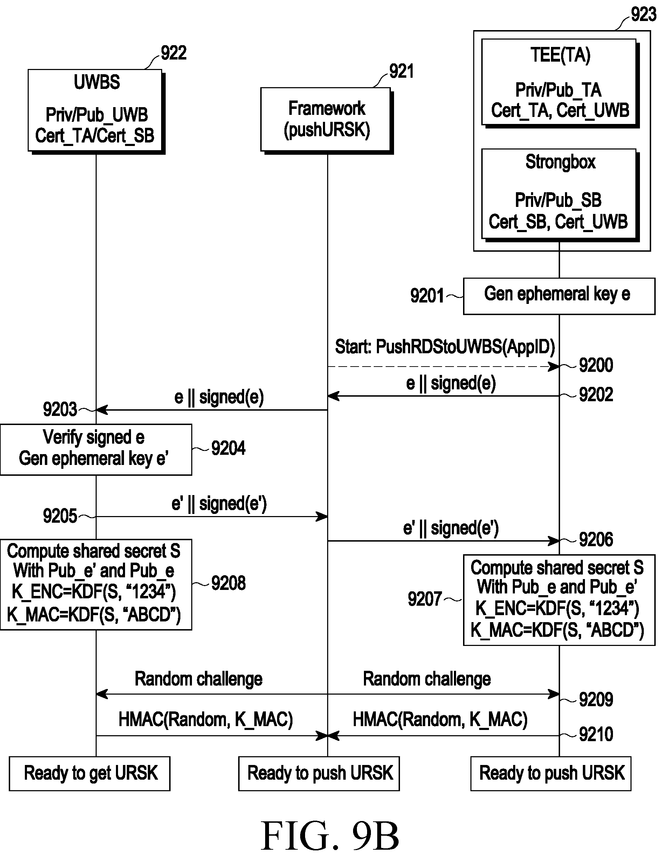

In the embodiment of FIG. 7B, the secure channel is configured between the UWBS 723 and the second secure component 724 through the framework 722 by a function call (API call). In other words, the secure channel may not be directly configured between the UWBS 723 and the secure component 724, but may be set via the framework 722. For example, a secure channel (a first secure channel) may be established between the TEE (or SB) 724 and the framework 722, and a secure channel (a second secure channel) may be configured between the framework 722 and the UWBS 723, thereby indirectly configuring a secure channel between the TEE (or SB) 724 and the UWBS 723. This is further described below with reference to FIGS. 9A and 9B.

In the embodiment of FIG. 7B, the secure channel may be an asymmetric key or a symmetric key-based secure channel. In other words, in the embodiment of FIG. 7B, the secure channel may be configured based on an asymmetric cryptographic algorithm or a symmetric cryptographic algorithm. As such, unlike the embodiment of FIG. 7A using the first secure component, in the embodiment of FIG. 7B using the second secure component, an asymmetric key-based secure channel may be set.

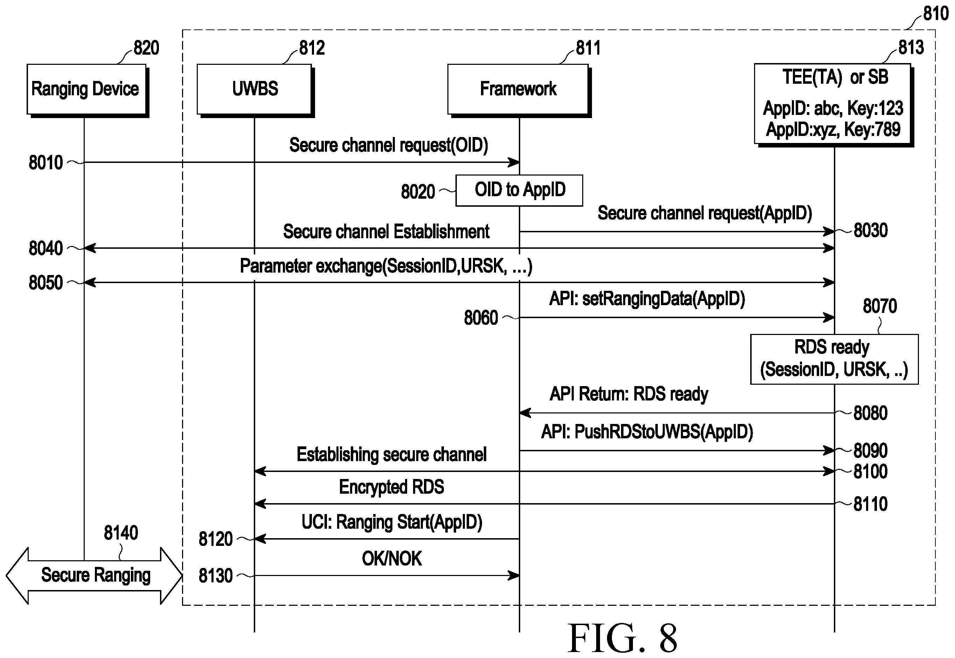

FIG. 8 is a flowchart illustrating a method for providing an RDS by an electronic device including a second secure component according to an embodiment of the disclosure.

For UWB secure ranging, the electronic device needs to perform end-to-end encryption (E2EE) communication with an external electronic device. To this end, the specific session key URSK shared with the external device should be safely transferred from the secure component to the UWBS. In the embodiment of FIG. 8, an embodiment in which the session key may be safely transferred from the secure component to the UWBS is described.

In the embodiment of FIG. 8, the electronic device 810 may be, e.g., an electronic device having the configuration of FIG. 6, and the electronic device 810 may include a framework 811, a UWBS 812, and a second secure component 813, and may communicate with an external electronic device 820. The second secure component 813 may be a TEE (or a TA in the TEE) and/or an SB. The TEE may include a trusted application (TA). Meanwhile, although not illustrated, the electronic device 810, like other UWB devices, may include at least one application (UWB-enabled application), and the framework and UWB-enabled application may be implemented by at least one processor (e.g., an application processor (AP)). Accordingly, in the disclosure, the operation of the framework and/or the UWB-enabled application may be expressed as the operation of the processor.

In the embodiment of FIG. 8, it is assumed that the second secure component 813 includes a secure channel key (e.g., a key having 123 as the key value) corresponding to a first application (UWB-enabled application having abc as the application identifier (e.g., Application ID(AppID) or UUID)) and a secure channel key (e.g., a key having 789 as the key value) corresponding to a second application (UWB-enabled application having xyz as the application identifier (e.g., Application ID(AppID) or UUID)). As an embodiment, the secure channel key may include a key for encryption and/or a key for message authentication. However, the disclosure is not limited thereto, and the second secure channel may include more secure channel keys or a single secure channel key.

In operation 8010, the external electronic device 820 may transmit a secure channel request (a first secure channel request) to the electronic device 810. For example, the external electronic device 820 may transmit the first secure channel request including an OID to the electronic device 810. The first secure channel request may be a request for requesting to generate a secure channel between the external electronic device 820 and the electronic device 810. In other words, the first secure channel request may be a request for generating a secure channel between devices. The transmitted first secure channel request may be transmitted to the framework 811 of the electronic device 810.

In operation 8020, the framework 811 may identify an application identifier (e.g., an AppID) matching the OID included in the first secure channel request. Accordingly, the framework 811 may convert the OID into the AppID. Here, the AppID may be an ID for identifying the UWB-enabled application provided by the service provider. In the disclosure, the AppID may be distinguished from the applet ID (AID) for identifying the applet described above. In an embodiment, the framework 811 may include a mapping table (list) between the OID and the AppID.

In operation 8030, the framework 811 may transfer the second secure channel request corresponding to the first secure channel request to the second secure component 813 of the electronic device 810. For example, the framework 811 may transmit the second secure channel request including the AppID matching the OID of the first secure channel request to the second secure component 813.

In operation 8040, the electronic device 810 may establish a secure channel between the second secure component 813 (or the electronic device 810) of the electronic device 810 and the external electronic device 820. In an embodiment, the secure channel may be associated with the UWB-enabled application identified by the AppID included in the second secure channel request, and may be configured directly or indirectly between the external electronic device 820 and the second secure component 813.

In operation 8050, the electronic device 810 may perform a parameter exchange procedure for a UWB session with the external electronic device 820 through the configured secure channel. Accordingly, the electronic device 810 may negotiate the value of the set parameter with the external electronic device 820. For example, the electronic device 810 may negotiate the value of the parameter such as the session ID and/or the URSK through the set secure channel. The exchanged parameter may be stored in the second secure component 813. In an embodiment, the parameter may include a UWB capability parameter and/or a UWB configuration parameter.

In operation 8060, the framework 811 may transmit a command for configuring the ranging data RDS to the second secure component 813. For example, the framework 811 (or UWB-enabled application) may call/use the setRangingData() API/command for the second secure component 813. The setRangingData() has a function of allowing the second secure component 813 to prepare (or set/generate) the RDS. In other words, setRangingData() may be an API used to allow the second secure component 813 to set RDS. setRangingData() may include an AppID for the application to identify which application called the API.

In operation 8070, the second secure component 813 may prepare (or set/generate) the RDS. For example, the TEE (or TA in TEE) may prepare RDS. In an embodiment, the RDS may include a session ID and/or a URSK.

In operation 8080, the second secure component 813 may transmit a response corresponding to a command for configuring the ranging data RDS to the framework 811. For example, the second secure component 813 may transfer an API return corresponding to the setRangingData (AppID) to the framework 811. In an embodiment, the return may include a value (API Return: RDS ready) indicating that the RDS is ready (or configured/generated) .

In operation 8090, the framework 811 may transfer a command for transferring the RDS to the UWBS to the second secure component 813. For example, the framework 811 (or UWB-enabled application) may call/use the PushRDStoLJWBS () API/command for the second secure component 813. PushRDStoUWBS() has a function of allowing the second secure component 813 to transmit (or push) the prepared RDS to UWBS. In other words, PushRDStoUWBS() may be an API used to allow the second secure component 813 to transmit the RDS to UWBS. PushRDStoUWBS() may include the AppID for the application corresponding to the prepared RDS.

In operation 8100, the electronic device 810 may establish a secure channel between the UWBS 812 and the second secure component 813. Accordingly, a secure channel may be established between the UWBS 812 and the second secure component 813 in the device. For example, a secure channel may be established between UWBS and TEE (or TA in TEE). As described above with reference to FIG. 7B, the secure channel between the UWBS 812 and the second secure component 813 may be indirectly set through, e.g., the framework 811. An example of this secure channel establishment procedure is described below with reference to FIGS. 9A and 9B.

In operation 8110, the second secure component 813 may transfer the encrypted RDS to the UWBS 812 through the established secure channel. For example, the TEE (or TA in the TEE) may encrypt the RDS using the encryption key K_ENC obtained through the secure channel establishment procedure, and may transfer the encrypted RDS to the UWBS 812. Accordingly, the RDS may be safely transferred (pushed) from the second secure component to the UWBS.

In operation 8120, the framework 811 may transmit a ranging start command for starting the UWB session to the UWBS 812. For example, the framework 811 may transmit a UCI command (UCI: Ranging Start()) for starting UWB session/ranging to UWBS. Ranging Start() may include an AppID. In an embodiment, the AppID may be associated with a session ID for identifying the UWB session.

In operation 8130, the UWBS 812 may transmit a response corresponding to the ranging start command to the framework 811. In an embodiment, the response may include a state value indicating whether the ranging start command is accepted or not. For example, the response may include an OK value indicating that the ranging start command is accepted, or an NOK value indicating that the ranging start command is not accepted.

In operation 8140, the electronic device 810 may perform secure ranging with the external electronic device 820 through the UWBS 812. In this case, the UWBS 812 may perform secure ranging using the URSK.

As illustrated in the embodiment of FIG. 8, in the electronic device including the second secure component, the RDS including the URSK may be pushed from the second secure component to the UWBS by the API call of the application. For example, the RDS may be transmitted from the TEE (or TA in the TEE) to the UWBS through the PushRDStoLJWBS (AppID) API call of the application.

Meanwhile, the secure ranging operation using the session key transferred by the second secure component disclosed in FIG. 8 may be viewed as the same as the secure ranging operation using the session key transferred by the first secure component disclosed in FIG. 4 from the perspective of the external device.

### <First embodiment of secure channel establishment procedure between UWBS and second secure component (e.g., TEE)>

FIG. 9A illustrates a procedure for configuring a secure channel between a UWBS and a secure component using a Symmetric scheme according to an embodiment of the disclosure.

The secure channel establishment procedure of FIG. 9A may be an example of the secure channel establishment procedure of operation 8100 of FIG. 8.

The symmetric method of FIG. 9A corresponds to a method of mutually exchanging random values and generating a session key based on the corresponding random value. In this case, cryptogram is used to prove that it has a key for authentication. The generated session key may include a session key s_ENC (first session key) for encryption and/or a session key s_MAC (second session key) for message authentication.

In the embodiment of FIG. 9A, the electronic device may include a framework 911, a UWBS 912, and a secure component 913.

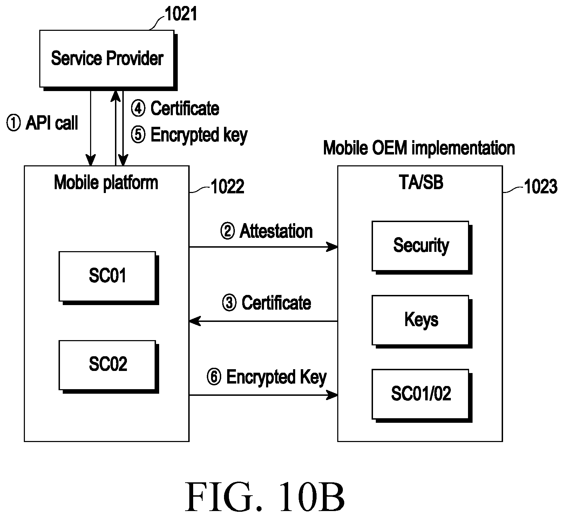

In the embodiment of FIG. 9A, the secure component 913 and the UWBS 912 may include pre-shared shared keys (e.g., K1 and K2) for a symmetric scheme using a symmetric cryptographic algorithm. Each key may be stored in a secure component through, e.g., a key provisioning operation to be described with reference to FIG. 10B.

The secure channel establishment procedure of FIG. 9A may be initiated when the PushRDStoUWBS() API is called, e.g., as in operation 9100. For example, when the command for pushing RDS to UWBS is transferred from the framework (or UWB-enabled application) to the secure component, the secure channel establishment procedure may be initiated. However, embodiments are not limited thereto.

Referring to FIG. 9A, in operation 9101, the secure component 913 generates a random value r and transmits the random value r to the framework 911. The secure component may be TEE or Strongbox. As described above, the TEE may include a TA, and the operation of the secure component which is the TEE may be understood as the operation of the TA in the TEE.

In operation 9102, the framework 911 transmits the received random value r to the UWBS 912. The random value r may be referred to as a first random value.

In operation 9103, the UWBS 912 may perform an operation of generating a random value r' (Gen random r'), an operation of generating a first session key s_enc (Gen SessionKey s_enc), an operation of generating a second session key s_MAC (Gen SessionKey s_MAC), and/or an operation of generating a cryptogram q (Gen cryptogram q).

The UWBS 912 may generate a random value r' through a random value generation operation. The random value r' may be referred to as a second random value.

The UWBS 912 may generate the first session key s_enc used for encryption through the first session key generation operation.

The UWBS 912 may generate the second session key s_MAC used for message authentication through the second session key generation operation.

The UWBS 912 may generate a cryptogram (q) through a cryptogram generation operation. The cryptogram(q) may be referred to as a first cryptogram.

In operation 9104, the UWBS 912 may transmit the random value r' and the cryptogram q to the secure component 913. The random value r' and the cryptogram q may be transferred to the secure component 913 through the framework 911.

In operation 9105, the secure component may perform a first session key (s_enc) generation operation (Gen SessionKey s_enc), a second session key (s_MAC) generation operation (Gen SessionKey s_MAC), a cryptogram (q) verification operation (Verify cryptogram (q)), and/or a cryptogram (p) generation operation (Gen cryptogram p). In an embodiment, the session key may be generated based on a secure channel key and a random value.

The secure component 913 may generate the first session key s_enc used for encryption through the first session key generation operation.

The secure component 913 may generate the second session key s_MAC used for message authentication through the second session key generation operation.

The secure component 913 may verify the cryptogram q received from the UWBS 912 through the cryptogram verification operation.

The secure component 913 may generate cryptogram(p) through a cryptogram generation operation. The cryptogram(p) may be referred to as a second cryptogram.

In operation 9106, the secure component 913 may transmit the cryptogram p to the UWBS 912. The cryptogram p may be transferred to the secure component 913 through the framework 911.

In operation 9107, the UWBS 912 may perform a cryptogram (p) verification operation (Verify cryptogram (p)). The UWBS 912 may verify the cryptogram p received from the secure component 913 through the cryptogram verification operation.

In operation 9108, the framework 911 may perform a random challenge operation on the UWBS 912 and the secure component 913. For example, as illustrated, the framework 911 may transmit the random challenge (random value) to the UWBS 912 and the secure component 913 through the random challenge operation.

In operation 9109, the framework 911 may receive a response to the random challenge from the UWBS 912 and the secure component 913. For example, as illustrated, the framework 911 may receive the MAC generated based on the second session key s_MAC used for random challenge (Random) and message authentication from the UWBS 912 and the secure component 913, respectively. As an embodiment, a hash-based message authentication code (HMAC) algorithm or a cipher-based message authentication code (CMAC) algorithm may be used to generate the MAC.

Further, the framework 911 may determine whether the MAC (the first MAC) received from the UWBS 912 matches the MAC (the second MAC) received from the secure component 913.

Through this process, the UWBS 912 may be ready to receive the URSK (or RDS), and the framework 911 and the secure component 913 may be ready to push the URSK (or RDS) to the UWBS 912. For example, when the MAC (the first MAC) received from the UWBS 912 matches the MAC (the second MAC) received from the secure component 913, the UWBS 912 may be ready to receive the URSK (or RDS), and the framework 911 and the secure component 913 may be ready to transfer the URSK (or RDS) to the UWBS 912.

### <Second embodiment of secure channel establishment procedure between UWBS and second secure component (e.g., TEE)>

FIG. 9B illustrates an example of a procedure for configuring a secure channel between a UWBS and a secure component using an asymmetric method according to an embodiment of the disclosure.

The secure channel establishment procedure of FIG. 9B may be an example of the secure channel establishment procedure of operation 8100 of FIG. 8.

The asymmetric method of FIG. 9B is characterized in that a shared secret key is generated using an elliptic curve (ECC)-based ephemeral key to satisfy a perfect forward sequence (PFS). The generated shared secret key may be used to generate a session key. Further, the asymmetric method requires a certificate and a private key (static key) previously stored by the mobile vendor for authentication, and the ephemeral key and the static key may be configured according to the ECC algorithm on both sides to generate and utilize a shared secret.

In the embodiment of FIG. 9B, the electronic device may include a framework 921, a UWBS 922, and a secure component 923. As an embodiment, the secure component 923 may be a TEE or SB. As described above, the TEE may include a TA, and the operation of the secure component which is the TEE may be understood as the operation of the TA in the TEE.

In the embodiment of FIG. 9B, the electronic device may include a framework 921, a UWBS 922, and a secure component 923. For example, the secure component TA may include the private key/public key Priv/Pub_TA of the TA, the certificate Cert_TA of the TA, and/or the certificate Cert_UWB of the UWBS, the secure component SB may include the private key/public key Priv/Pub_SB of the SB, the certificate Cert_SB of the SB, and/or the certificate Cert_UWB of the UWBS, and the UWBS may include the private key/public key Priv/Pub_UWB of the UWBS, the certificate Cert_TA of the TA, and/or the certificate Cert_SB of the SB. Each key may be stored in a secure component through, e.g., a key provisioning operation to be described with reference to FIG. 10B.

Referring to FIG. 9B, in operation 9201, the secure component 923 may perform a first ephemeral key e generation operation (Gen ephemeral key e). For example, the TEE (or TA) may generate the first ephemeral key e through the first ephemeral key generation operation. In an embodiment, the ephemeral key e may be generated before the PushRDStoUWBS() API is called, e.g., as in operation 9200, but is not limited thereto.

The secure component 923 may further generate a signed value (signed(e)) for the first ephemeral key (e). For example, the TEE (or TA) may further generate a signed value (signed(e)) for the first ephemeral key (e) using the private key (Priv_TA) of the TA. In the disclosure, the first ephemeral key e may be referred to as Pub_e, and a signed value (signed(e)) for the first ephemeral key may be referred to as signed(Pub_e).

In operation 9202, the secure component 923 transmits the first ephemeral key and the signature value ("e||signed(e)") for the first ephemeral key to the framework 921, and in operation 9203, the framework 921 transmits the received signature value ("e|signed(e)" or "Pub_e|signed(Pub_e)") for the first ephemeral key and the first ephemeral key to the UWBS.

In operation 9204, the UWBS 922 may perform an operation (Verify signed e) of verifying the signed ephemeral key (signed e) and an operation (Gen ephemeral key e') of generating the second ephemeral key (e'). For example, the UWBS 922 may verify the signed value (signed(e)) for the first ephemeral key using the certificate of the TA (or the public key (Pub_TA) of the TA), and may generate the second ephemeral key (e') through the operation of generating the second ephemeral key. As an embodiment, the shared secret key may be generated/calculated based on the first ephemeral key e and the second ephemeral key e'. In the disclosure, the second ephemeral key (e') may also be referred to as Pub_e'.

The UWBS 922 may further generate a signed value (singed(e') or signed(Pub_e', Pub_e)) for the second ephemeral key (e'). For example, the UWBS 922 may further generate a signature value for the second ephemeral key e' by using the private key Priv_UWBS of the UWBS.

In operation 9205, the UWBS 922 transmits the signature value ("e' || signed(e')" or "Pub_e' || signed(Pub_e', Pub_e)") for the second ephemeral key and the second ephemeral key to the framework 921, and in operation 9206, the framework 921 transmits the received signature value ("e' || signed(e')" or "Pub_e' || signed(Pub_e', Pub_e)") for the second ephemeral key and the second ephemeral key to the secure component 923.

In operation 9207, the secure component 923 may perform an operation of calculating the shared secret key S by using the second ephemeral key Pub_e' and the first ephemeral key Pub_e, an operation of generating the session key K_ENC used for encryption based on the shared secret key S and the pre-shared parameter (e.g., 1234) (first context), and an operation of generating the session key K_MAC for MAC based on the shared secret key S and the pre-shared parameter (e.g., ABCD) (second context). For example, the TEE (or TA) may generate the shared secret key S by using the second ephemeral key e' and the first ephemeral key e, generate the session key K_ENC for encryption from the first context and the shared secret key S by using a preset key derivation function (KDF), and generate the session key K_MAC for message authentication from the second context and the shared secret key S by using the preset KDF.

In operation 9208, the UWBS 922 may perform an operation of calculating the shared secret key S by using the second ephemeral key Pub_e' and the first ephemeral key Pub_e, an operation of generating the session key K_ENC used for encryption based on the shared secret key S and the pre-shared parameter (e.g., 1234) (first context), and an operation of generating the session key K_MAC for MAC based on the shared secret key S and the pre-shared parameter (e.g., ABCD) (second context). For example, the UWBS 922 may generate the shared secret key S by using the second ephemeral key Pub_e' and the first ephemeral key Pub_e, generate the first session key K_ENC for encryption from the first context and the shared secret key S by using a preset KDF, and generate the second session key K_MAC for message authentication from the second context and the shared secret key S by using the preset KDF. Accordingly, the UWBS 922 and the secure component 923 may own the key K_ENC for the same encryption and the key K_MAC for message authentication.

Meanwhile, in the illustrated embodiment, it is exemplified that operation 9208 is performed after operation 9205, but operation 9208 may be performed at any time point after operation 9204. For example, operation 9208 may be performed after operation 9204 and before operation 9205.

In operation 9209, the framework 921 may perform a random challenge operation on the UWBS 922 and the secure component 923. For example, as illustrated, the framework 921 may transmit the random challenge (random value) to the UWBS 922 and the secure component 923 through the random challenge operation.

In operation 9210, the framework 921 may receive a response to the random challenge from the UWBS 922 and the secure component 923. For example, as illustrated, the framework 921 may receive the MAC generated based on the random challenge and the second session key K_MAC used for message authentication from the UWBS 922 and the secure component 923, respectively. As an embodiment, a hash-based message authentication code (HMAC) algorithm or a cipher-based message authentication code (CMAC) algorithm may be used to generate the MAC.

Further, the framework 921 may determine whether the MAC (the first MAC) received from the UWBS 922 matches the MAC (the second MAC) received from the secure component 923.

Through this process, the UWBS 922 may be ready to receive the URSK (or RDS), and the framework 921 and the secure component 923 may be ready to push the URSK (or RDS) to the UWBS 922. For example, when the MAC (the first MAC) received from the UWBS 922 matches the MAC (the second MAC) received from the secure component 923, the UWBS 922 may be ready to receive the URSK (or RDS), and the framework 921 and the secure component 923 may be ready to transfer the URSK (or RDS) to the UWBS 922.

### <Third embodiment of secure channel establishment procedure between UWBS and second secure component (e.g., TEE)>

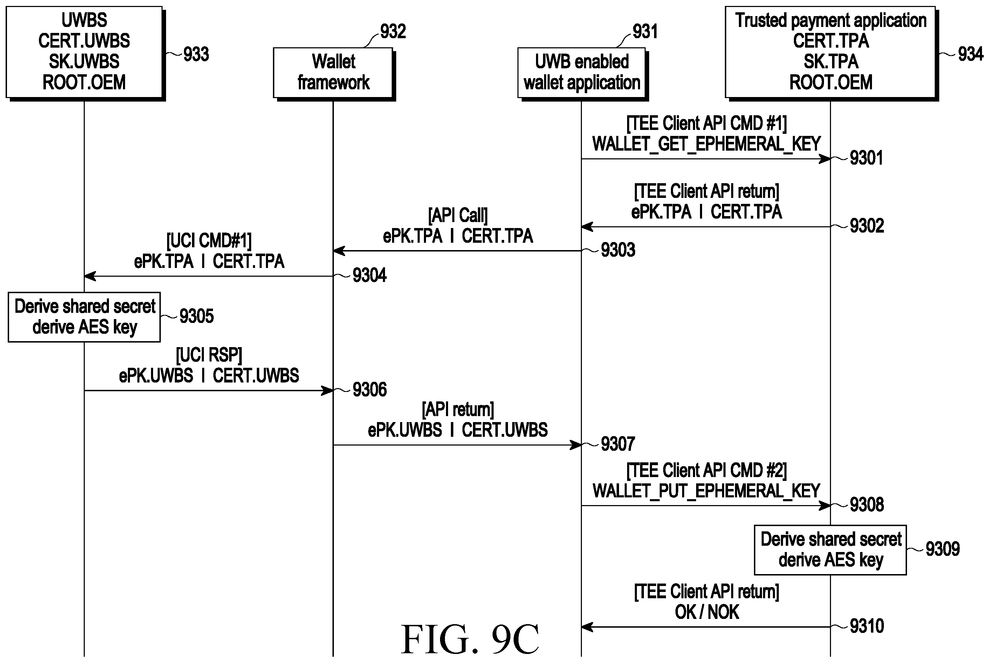

FIG. 9C illustrates another example procedure for establishing a secure channel between a UWBS and a secure component using an asymmetric method according to an embodiment of the disclosure.

The secure channel establishment procedure of FIG. 9C may be an example of the secure channel establishment procedure of operation 8100 of FIG. 8.

The asymmetric method of FIG. 9C is characterized in that a shared secret key is generated using an elliptic curve (ECC)-based ephemeral key to satisfy a perfect forward sequence (PFS). The generated shared secret key may be used to generate a session key. Further, the asymmetric method requires a certificate and a private key (static key) previously stored by the mobile vendor for authentication, and the ephemeral key and the static key may be configured according to the ECC algorithm on both sides to generate and utilize a shared secret.

In the embodiment of FIG. 9C, for convenience of description, it is assumed that the electronic device is an electronic device (e.g., the first electronic device of FIG. 2B) for providing a UWB-based payment service, and the secure component is a TEE (TA), but the disclosure is not limited thereto.

In the embodiment of FIG. 9C, the electronic device may include a UWB enabled wallet application 931, a wallet framework 932, a UWBS 933, and a trusted payment application 934.

In the embodiment of FIG. 9C, the UWBS 933 and the trusted payment application (TPA) 934 each include a key and a certificate for an asymmetric method using an asymmetric cryptographic algorithm. For example, the TPA 934 may include a secret key (private key) (SK.TPA) of the TPA, a certificate (CERT.TPA) of the TPA, and/or a root certificate (ROOT.OEM), and the UWBS may include a secret key (private key) (SK.UWBS) of the UWBS, a certificate (CERT.UWBS) of the UWBS, and/or a root certificate (ROOT.OEM). Each key may be stored in a secure component through, e.g., a key provisioning operation to be described with reference to FIG. 10B.

Table 1 below illustrates an example of keys and data used to establish a secure channel between UWBS and TEE (TPA/TA).

**[Table 1]**

| Key name | Type/Length | Purpose | Presence |
|---|---|---|---|
| CERT. TPACERT.UWBS | ECC-P256 | Public key certificate of the UWBS and Trusted Payment Application. This certificate is issued by Certificate Authority (e.g., Mobile OEM). | Mandatory |
| SK.TPASK.UWBS | ECC-P256 | Secret (Private) key of the Trusted Payment Application and UWBS to prove ownership of the authorization certificate. | Mandatory |
| shared credential | AES-128 | Derived shared credential by shared secret from static keys and shared secret from ephemeral keys. This value is K-MAC in accordance with the section 9.1.1.4. | Optional |

Table 2 below shows an example of certificates (e.g., the certificate of TPA (CERT.TPA) and the certificate of UWBS (CERT.UWBS)) exchanged to establish a secure channel between UWBS and TEE (TPA/TA).

**[Table 2]**

| Tag | Length | Description | Presence |
|---|---|---|---|
| 0x7F21 | | Certificate | Mandatory |
| 0x93 | 1-16 | Serial number | Mandatory |
| 0x42 | Variable | CA Identifier | Optional |
| 0x5F20 | 16 | Subject identifier | Mandatory |
| 0x95 | 1 | Key Usage('82' digital signature verification, or | Optional |
| | | '88' encipherment for confidentiality; see [GPCS] Table 11-17) | |
| 0x5F25 | 4 | Effective Date (YYYYMMDD, BCD format) | Optional |
| 0x5F24 | 4 | Expiration Date (YYYYMMDD, BCD format) | Optional for device, not present for reader |
| 0x53 | 1-127 | Discretionary Data (unspecified format). Can be used to store the OID corresponding to the credentials, useful in case SELECT ADF with multiple selection must be supported. | Optional |
| 0x73 | 1-127 | Discretionary Data (BER-TLV encoded) | Optional |
| 0x7F49 | | Public Key Data Object | Mandatory |
| 0xB0 | 65 | Public Key Point Q (in uncompressed encoding as specified in [TR-03111] section 3.2.1) | Mandatory |
| 0xF0 | 1 | Key Parameter Reference (00 for NIST P256) | Mandatory |
| 0x5F37 | 64 | Signature value | Mandatory |

Referring to FIG. 9C, in operation 9301, the UWB enabled wallet application 931 may transmit a command for obtaining an ephemeral key from the TPA to the TPA 934. For example, the UWB enabled wallet application 931 may transfer a TEE command (e.g., TEE Client API CMD: WALLET_GET_EPHEMERAL_KEY) to obtain an ephemeral key and/or a signed ephemeral key from the TPA to the TPA 934. Table 3 below illustrates an example of a TEE command for WALLET_GET_EPHEMERAL_KEY.

**[Table 3]**

| Description | This function is to get ephemeral key and signed ephemeral key from Payment Trusted Application. Data is composed ephemeral key and signature of the ephemeral key so those are totally 64 bytes (512bit). |
|---|---|
| commandID | 11 |
| params[1] | - Output data buffer: a buffer of 64 bytes, aligned on a byte boundary- Data flow direction: output |
| Error | TBD (0x00000001 - 0xFFFEFFFF) |

In operation 9302, the TPA 934 may generate the ephemeral key (ePK.TPA) of the TPA and may transmit a response including the ephemeral key (ePK) of the TPA and/or the certificate (CERT.TPA) of the TPA to the UWB enabled wallet application 931. For example, the TPA 934 may generate an ephemeral key (ePK.TPA) of the TPA and transfer a TEE response (e.g., TEE Client API Return: ePK.TPA | CERT.TPA) including the ephemeral key (ePK.TPA) of the TPA and the certificate (CERT.TPA) of the TPA to the UWB enabled wallet application 931. In operation 9303, the UWB enabled wallet application 931 may transmit the received ephemeral key (ePK.TPA) of the TPA and/or the certificate (CERT.TPA) of the TPA to the framework 932. For example, the UWB enabled wallet application 931 may call an API (e.g., a framework API) to transfer the received ephemeral key (ePK) of the TPA and the certificate (CERT.TPA) of the TPA to the framework 932.

In operation 9304, the framework 932 may transfer the received ephemeral key (ePK) of the TPA and/or the certificate (CERT.TPA) of the TPA to the UWBS 933. For example, the framework 932 may transfer a UCI command (e.g., UCI CMD: WALLET_PUT_EPHEMERAL_KEY_FROM_TEE_CMD) including the received ephemeral key (ePK) of the TPA and/or the certificate (CERT.TPA) of the TPA to the UWBS 933. WALLET PUT_EPHEMERAL _KEY_FROM_TEE_ CMD may be a command for putting an ephemeral key and certificate from TEE (TPA/TA) into UWBS.

Table 4 below shows an example of a UCI command for WALLET_PUT_EPHEMERAL_KEY_FROM_TEE_CMD.

**[Table 4]**

| **WALLET_PUT_EPHEMERAL_KEY_FROM_TEE_CMD** | | |
|---|---|---|
| Payload Field(s) | Length(Bits) | Value/ Description |
| command | 0 | Put the ephemeral key and certificate from TEE to UWBS |
| Payload length | 8 | The length of Payload |
| ePK.TPA | 256 | Ephemeral key from Trusted Payment Application |
| CERT.TPA | Variable | Certificate of Trusted Payment Application |

In operation 9305, the UWBS 933 may generate a shared secret key and may generate an AES key. For example, the UWBS 933 may generate the ephemeral key (ePK.UWBS) of the UWBS and may generate the shared secret S using the ephemeral key (ePK.UWBS) of the UWBS and the received ephemeral key (ePK.TPA) of the TPA. Further, the UWBS 933 may generate an AES key (K_ENC) for encryption and an AES key (K_MAC) for message authentication using the generated shared secret S. In operation 9306, the UWBS 933 may transfer the generated ephemeral key (ePK.UWBS) of the UWBS and the certificate (CERT.UWBS) of the UWBS to the framework 932. For example, the UWBS 933 may transmit a UCI response (e.g., UCI RSP: WALLET_PUT_EPEHERAL_KEY_FROM_TEE_RSP) including the generated ephemeral key (ePK.UWBS) of the UWBS and the certificate (CERT.UWBS) of the UWBS to the framework 932. WALLET_PUT_EPEHERAL_KEY_FROM_TEE_RSP may be a response to WALLET_PUT_EPHEMERAL_KEY_FROM_TEE_CMD.

Table 5 below shows an example of WALLET_PUT_EPEHERAL_KEY_FROM_TEE_RSP.

**[Table 5]**

| **WALLET_PUT_EPHEMERAL_KEY_FROM_TEE_RSP** | | |
|---|---|---|
| Payload Field(s) | Length(bits) | Value/ Description |
| Status | 8 | For various status values refer to Table 37 in UCI Specification of FiRa Consortium |
| Payload length | 8 | The length of Payload |
| ePK.UWBS | 256 | Ephemeral key from UWBS |
| CERT.UWBS | Variable | Certificate of UWBS |

In operation 9307, the framework 932 may transfer the received ephemeral key (ePK.UWBS) of the UWBS and/or the certificate (CERT.UWBS) of the UWBS to the UWB enabled wallet application 931. For example, the framework 932 may transmit an API response (e.g., API Return: ePK.UWBS | CERT.UWBS) including the received ephemeral key (ePK.UWBS) of the UWBS and/or the certificate (CERT.UWBS) of the UWBS to the UWB enabled wallet application 931. In operation 9308, the UWB enabled wallet application 931 may transmit a command for putting the ephemeral key from the UWBS to the TPA 934. For example, the UWB enabled wallet application 931 may transmit a TEE command (e.g., TEE Client API CMD: WALLET_PUT_EPHEMERAL_KEY) for putting the ephemeral key from the UWBS and/or the signed ephemeral key into the TPA to the TPA 934.

Table 6 below shows an example of a TEE command for WALLET_PUT_EPHEMERAL_KEY.

**[Table 6]**

| Description | This function is to put ephemeral key and signed ephemeral key from UWBS to Trusted Payment Application so those are totally 64bytes(512bit). |
|---|---|
| commandID | 12 |
| params[0] | -Input data buffer: a buffer of 64 bytes, aligned on a byte boundary-Data flow direction: input |
| Error | TBD (0x00000001 - 0xFFFEFFFF) |

In operation 9309, the TPA 934 may generate a shared secret key and may generate an AES key. For example, the TPA 934 may generate the shared secret S using the received ephemeral key ePK.UWBS of the UWBS and the ephemeral key ePK.TPA of the TPA. Further, the TPA 934 may generate an AES key (K_ENC) for encryption and an AES key (K_MAC) for message authentication using the generated shared secret S. In operation 9310, the TPA 934 may transmit a response to a command for putting an ephemeral key from the UWBS to the UWB enabled wallet application 931. For example, the TPA 934 may transfer a TEE response (e.g., TEE Client API Return: OK/NOK) indicating OK/NOK to the UWB enabled wallet application 931.

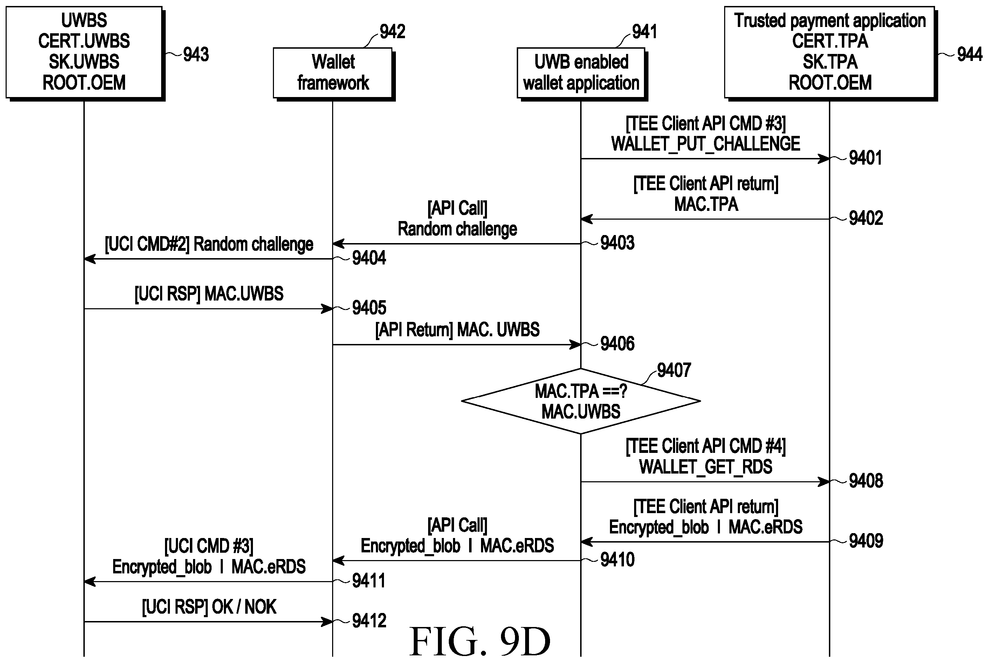

FIG. 9D illustrates a procedure for a UWBS to receive an RDS from a secure component through a secure channel between the UWBS and the secure component according to an embodiment of the disclosure.

In the embodiment of FIG. 9D, the secure channel between the UWBS and the secure component may be configured, e.g., through the secure channel configuration procedure of FIG. 9C.

In the embodiment of FIG. 9D, for convenience of description, it is assumed that the electronic device is an electronic device (e.g., the first electronic device of FIG. 2B) for providing a UWB-based payment service, and the secure component is a TEE (TA), but the disclosure is not limited thereto.

In the embodiment of FIG. 9D, the electronic device may include a UWB enabled wallet application 941, a wallet framework 942, a UWBS 943, and a trusted payment application 944.

In operation 9401, the UWB enabled wallet application 941 may transmit a random challenge (random value) to the TPA 944. For example, the UWB enabled wallet application 941 may transfer a TEE command (e.g., TEE Client API CMD: WALLET_PUT_CHALLENGE) including the random challenge to the TPA 944. WALLET_PUT_CHALLENGE is used to obtain MAC (e.g., CMAC) from TPA, the input includes a random value, and the output includes a random value and a MAC value of a shared secret.

Table 7 below shows an example of a TEE command for WALLET_PUT_CHALLENGE.

**[Table 7]**

| Description | This function is to get CMAC from Trusted Payment Application. Input with random value and output with CMAC value of the random value and shared secret. This can check whether UWBS and Trusted Payment Application have same shared secret. |
|---|---|
| commandID | 21 |
| params[0] | -Input data buffer: a buffer of 16 bytes, aligned on a byte boundary-Data flow direction: input |
| params[1] | -Output data buffer: same length as input buffer, aligned on a byte boundary.-Data flow direction: output |
| Error | TBD (0x00000001 - 0xFFFEFFFF) |

In operation 9402, the TPA 944 may transmit the MAC (MAC.TPA) of the TPA to the UWB enabled wallet application 941. For example, the TPA 944 may generate a MAC (MAC.TPA) based on the received random challenge and shared secret and transfer a TEE response (e.g., TEE Client API Return: MAC.TPA) including the MAC (MAC.TPA) to the UWB enabled wallet application 941. In operation 9403, the UWB enabled wallet application 941 may transfer the random challenge (random value) to the framework 942. For example, the UWB enabled wallet application 941 may transfer the random challenge (random value) to the framework 942 by calling the framework API (API).

In operation 9404, the framework 942 may transmit the received random challenge to the UWBS 943. For example, the framework 942 may transfer a UCI command (e.g., WALLET_PUT_CHALLENGE_CMD) including the received random challenge to the UWBS 943. WALLET_PUT_CHALLENGE _CMD may be used to obtain the MAC (MAC.UWBS) of UWBS from UWBS.

Table 8 below shows an example of WALLET_PUT_CHALLENGE_CMD.

**[Table 8]**

| **WALLET_PUT_CHALLENGE_CMD** | | |
|---|---|---|
| Payload Field(s) | Length(bits) | Value/ Description |
| command | 0 | Get the MAC.UWBS from UWBS |
| Nonce | 128 | Random number used at once |

In operation 9405, the UWBS 943 may transfer the MAC (MAC.UWBS) of the UWBS to the framework 942. For example, the UWBS 943 may generate the MAC (MAC.UWBS) based on the received random challenge and shared secret, and may transfer a UCI response (e.g., WALLET_PUT_CHALLENGE_RSP) including the MAC (MAC.UWBS) to the framework 942. Table 9 below shows an example of WALLET_PUT_CHALLENGE_RSP.

**[Table 9]**

| **WALLET_PUT_CHALLENGE_RSP** | | |
|---|---|---|
| Payload Field(s) | Length(bits) | Value/ Description |
| Status | 8 | For various status values refer to Table 37 in UCI Specification of FiRa Consortium |

In operation 9406, the framework 942 may transfer the received MAC (MAC.UWBS) of the UWBS to the UWB enabled wallet application 941. For example, the framework 942 may transfer the MAC (MAC.UWBS) of the UWBS to the UWB enabled wallet application 941 through the API return. In operation 9407, the UWB enabled wallet application 941 may determine whether the MAC (MAC.TPA) of the TPA and the MAC (MAC.UWBS) of the UWBS are the same.

In operation 9408, the UWB enabled wallet application 941 may transfer a command for obtaining the RDS to the TPA 944. For example, when the MAC(MAC.TPA) of the TPA and the MAC(MAC.UWBS) of the UWBS are the same, the UWB enabled wallet application 941 may transfer a TEE command (e.g., TEE Client API Command: WALLET_GET_RDS) for obtaining the RDS to the TPA 944. WALLET_GET_RDS may be used to obtain an encrypted RDS from TPA.

Table 10 below shows an example of a TEE command for WALLET_GET_RDS.

**[Table 10]**

| Description | This function is to get encrypted RDS from Trusted Payment Application. |
|---|---|
| commandID | 31 |
| params[0] | -Value: a=Encryption Key ID-Data flow direction: input |
| params[1] | - Output data buffer: a buffer of 64bytes, aligned on a byte boundary.- Data flow direction: output |
| Error | TBD (0x00000001 - 0xFFFEFFFF) |

In operation 9409, the TPA 944 may transmit the encrypted RDS (encrypted_blob) to the UWB enabled wallet application 941. For example, the TPA 944 may transfer a TEE response (e.g., TEE Client API Return: Encrypted_blob | MAC.eRDS) including the encrypted RDS (Encrypted _blob) and the MAC(MAC.eRDS) of the encrypted RDS to the UWB enabled wallet application 941. In operation 9410, the UWB enabled wallet application 941 may transfer the received encrypted RDS (Encrypted _blob) to the framework 942. For example, the UWB enabled wallet application 941 may transmit the encrypted RDS (Encrypted _blob) and the MAC (MAC.eRDS) of the encrypted RDS to the framework 942 by calling the API (framework API).

In operation 9411, the framework 942 may transmit the received encrypted RDS (Encrypted _blob) to the UWBS 943. For example, the framework 942 may transmit a UCI command (e.g., WALLET_PUT_ENCRYPTED_RDS_CMD) including the encrypted RDS (Encrypted _blob) and the MAC (MAC.eRDS) of the encrypted RDS to the UWBS 943. WALLET_PUT_ENCRYPTED_RDS_CMD may be used to put RDS of UWBS from UWBS.

Table 11 below shows an example of WALLET_PUT_ENCRYPTED_RDS_CMD.

**[Table 11]**

| **WALLET_PUT_ENCRYPTED_RDS_CMD** | | |
|---|---|---|
| Payload Field(s) | Length(bits) | Value/ Description |
| command | 0 | Get the capability data from UWBS |
| Payload length | 8 | The length of Payload |
| Encrypted RDS | variable | RDS, which is encrypted by K-ENC in section 9.1.1.4 |
| MAC of encrypted RDS | 128 | MAC of encrypted RDS, which is derived by K-MAC in section 9.1.1.4. |

In operation 9412, the UWBS 943 may transmit a response to the framework 942. For example, the UWBS 943 may transmit a UCI response (e.g., WALLET_PUT_ENCRYPTED_RDS_RSP) corresponding to the UCI command to the framework 942. WALLET_PUT_ENCRYPTED_RDS_RSP may include information indicating a state OK/NOK of whether the encrypted RDS is normally received. Table 12 below shows an example of WALLET_PUT_ENCRYPTED_RDS_RSP.

**[Table 12]**

| **WALLET_PUT_ENCRYPTED_RDS_RSP** | | |
|---|---|---|
| Payload Field(s) | Length | Value/ Description |
| Status | 1 Octet | For various status values refer to Table 37 in UCI Specification of FiRa Consortium |

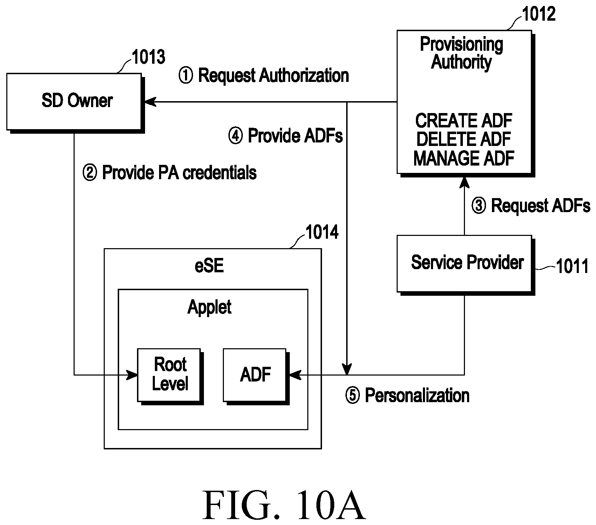

FIG. 10A illustrates a key provisioning method for an electronic device including a first secure component according to an embodiment of the disclosure.

The electronic device of FIG. 10A may be the electronic device of FIG. 5, and the first secure component may be an SE (e.g., an eSE).

Referring to FIG. 10A, in operation 1, for key provisioning of the service provider (SP) 1011, the provisioning authority (PA) 1012 may send a request for authorization to the security domain (SD) owner 1013, and in operation 2, the SD owner 1013 may provide the PA credential to the first secure component 1014, based on the request. In operation 3, the SP 1011 may request the ADF(s) from the PA 1012, and in operation 4, the PA 1012 may provide the ADF(s) to the first secure component 1014, based on the request. In operation 5, the SP 1011 may perform personalization on the ADF provided to the first secure component 1014.

As such, in order for the service provider 1011 to provide key provisioning to the first secure component 1014, various entities (PA, SD Owner, etc.) in various business contract relationships need to cooperate with each other. Accordingly, it is difficult for the service provider 1011 to directly provide the key to the first secure component 1014. In other words, it becomes difficult for the service provider 1011 to flexibly and efficiently provide a key.

FIG. 10B illustrates a key provisioning method for an electronic device including a second secure component according to an embodiment of the disclosure.

The electronic device of FIG. 10B may be the electronic device of FIG. 6, and the second secure component may be TEE (TA) or SB.

In the embodiment of FIG. 10B, the electronic device may include a mobile platform 1022 (e.g., an Android platform) and a second secure component 1023. In an embodiment, the mobile platform may include the above-described framework.

Referring to FIG. 10B, in operation 1, the service provider 1021 may invoke an API for key provisioning, and in operation 2, the mobile platform 1022 may provide attestation to the second secure component 1023. In operation 3, the second secure component 1023 transmits a certificate to the mobile platform 1022, and in operation 4, the mobile platform 1022 transmits the certificate to the service provider 1021. In operation 5, the service provider 1021 may transmit the encrypted key to the mobile platform 1022, and in operation 6, the mobile platform 1022 may transmit the encrypted key to the second secure component 1023.

In the embodiment of FIG. 10B using the second secure component, unlike the embodiment of FIG. 10A using the first secure component, the service provider 1021 may import its own credential into a trusted area, e.g., TEE or SB, in a secure manner. In this case, the mobile platform (or framework) 1022 of the electronic device only needs to provide an API for a provisioning method. Accordingly, the service provider 1021 may flexibly and efficiently provide a key.

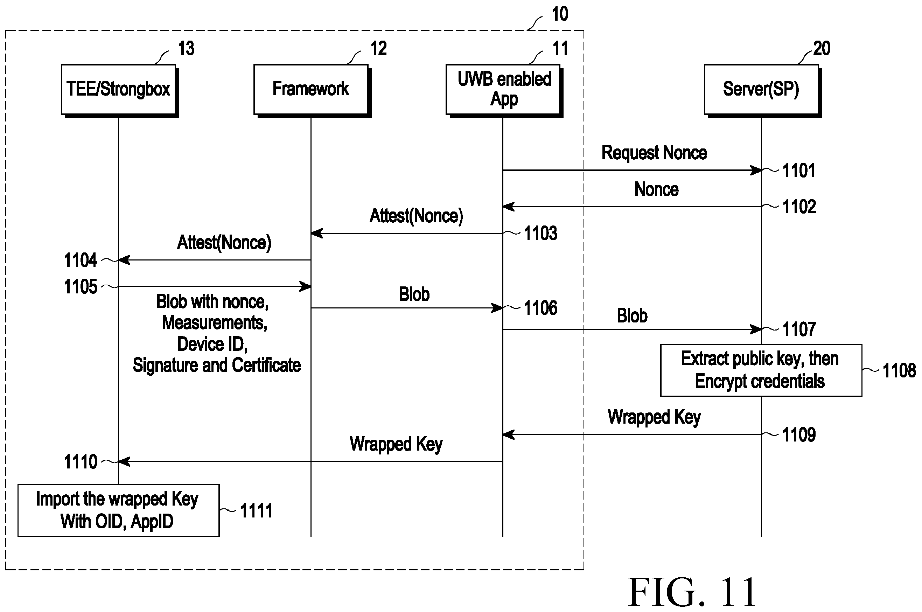

FIG. 11 illustrates an attestation procedure for key provisioning for an electronic device including a second secure component according to an embodiment of the disclosure.

In the embodiment of FIG. 11, the electronic device may be the electronic device of FIG. 6, and the second secure component may be TEE (TA) or SB.

In the embodiment of FIG. 11, the attestation procedure may be a part of the procedure of FIG. 10B. The attestation procedure is performed before key provisioning is performed.

Referring to FIG. 11, in operation 1101, the UWB-enabled application of the electronic device may request a nonce from a service provider (server), and in operation 1102, the service provider may provide the nonce to the UWB-enabled application based on the request.

In operation 1103, the UWB-enabled application may transmit an attest (attestation request) including nonce to the framework, and in operation 1104, the framework may transmit the attest (attestation request) to the second secure component.

In operation 1105, the second secure component may return a blob (attestation response) based on the attest (attestation request) to the framework. In an embodiment, the blob (attestation response) may include the nonce, a measurement(s), a device ID, a signature and/or a certificate. In operation 1106, the framework may transmit the blob to the UWB-enabled application, and in operation 1107, the UWB-enabled application may transmit the blob to the service provider.

In operation 1108, the service provider may extract the public key from the blob and may encrypt the credential (e.g., the secure channel key) by using a key wrapping method based on the public key.

In operation 1109, the service provider may transmit the wrapped key to the UWB-enabled application, and in operation 1110, the UWB-enabled application may transmit the wrapped key to the second secure component. In operation 1111, the second secure component may import the wrapped key together with the OID and/or the AppID.

Through such a procedure, the key (secure channel key) may be securely imported to the second secure component by the service provider.

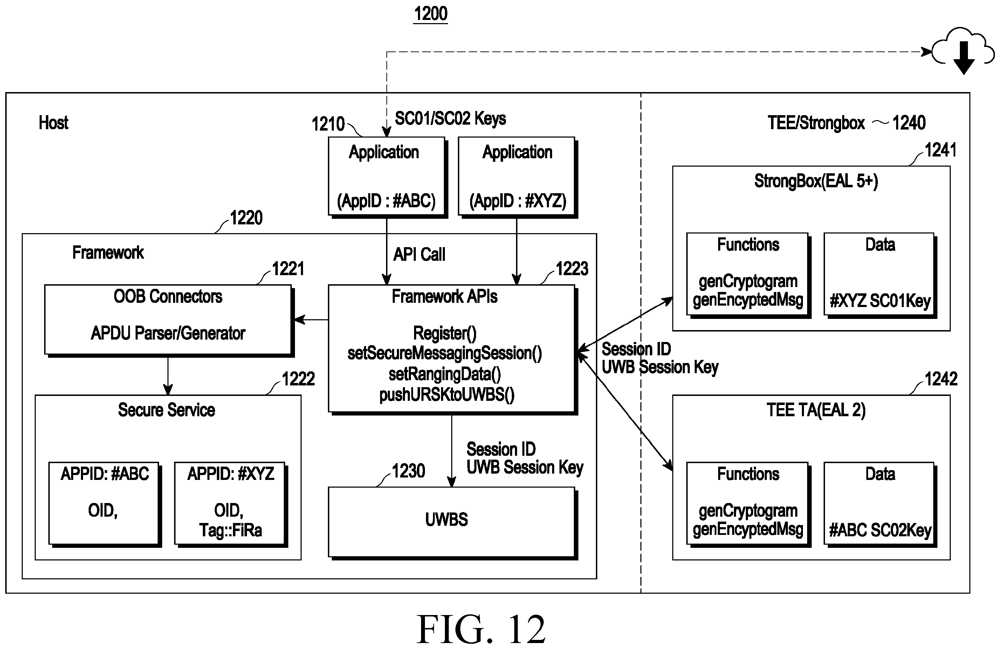

FIG. 12 illustrates an example configuration of an electronic device according to an embodiment of the disclosure.

In the embodiment of FIG. 12, the electronic device 1200 may be, e.g., a smart ranging device or a ranging device.

Referring to FIG. 12, the electronic device 1200 includes at least one application 1210, a framework 1220, a UWBS 1230, and/or a secure component 1240 (e.g., a TA and/or a strongbox).

Each application 1210 may be identified by an AppID and may call/use a framework API of the framework 1220. In an embodiment, the application 1210 may be a UWB-enabled application.

The framework 1220 may include an OOB connector 1221 and/or a secure service 1222, and may interface with the application 1210 through the framework API 1223. The framework API 1223 may include, e.g., a register () API for registering an application, a setsecureMessagingSession () API for setting a secure messaging session, a setRangingData () API for setting ranging data (or RDS), and/or a pushURSKtoUWBS () API for transferring URSK (or RDS) to UWBS.

The secure component 1240 may support a cryptogram generation function (genCryptogram) and/or an encrypted message generation function (genEncyptedMsg), and may include a secure channel key (e.g., SC02Key) corresponding to an application having a secure channel key (e.g., AppID (#ABC)), and a secure channel key (e.g., SC01Key) corresponding to an application having an AppID (#XYZ)). For example, the sb 1241 may support a cryptogram generation function (genCryptogram) and/or an encrypted message generation function (genEncyptedMsg) and may include a secure channel key (e.g., SC01Key) corresponding to an application having an AppID (#XYZ). As another example, the tee 1242 may support a cryptogram generation function (genCryptogram) and/or an encrypted message generation function (genEncyptedMsg) and may include a secure channel key (e.g., SC01Key) corresponding to an application having an AppID (#XYZ).

In an embodiment, the secure component 1240 may generate/store the session ID and/or the UWB session key URSK. The session ID and/or the UWB session key may be transferred from the secure component 1240 to the UWBS 1230 through the framework 1220 by the call of the pushURSKtoUWBS (API) of the application 1210.

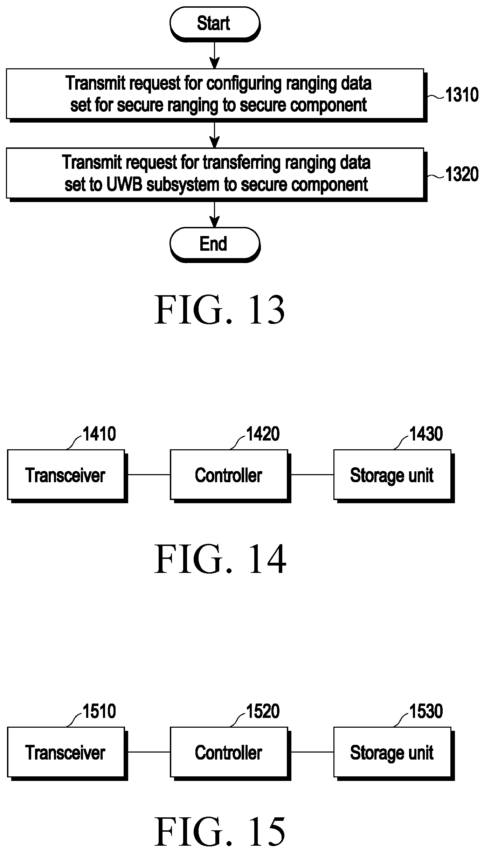

FIG. 13 is a flowchart illustrating a method by an electronic device according to an embodiment of the disclosure.

In the embodiment of FIG. 13, the electronic device may be a smart ranging device or a ranging device. A detailed description of each operation of the embodiment of FIG. 13 may refer to the description made above with reference to FIGS. 1 to 12. In the embodiment of FIG. 13, the operation of the electronic device may be, e.g., the operation of a framework (or application) of the electronic device or the operation of a controller (or processor) for controlling the framework (or application) of the electronic device.

The electronic device may transmit a request for setting a ranging data set for secure ranging to the secure component (1310). For example, the electronic device may transmit a request for setting a ranging data set for secure ranging to a TEE (or a TA in the TEE). In the disclosure, the ranging data set may be a set of data required for UWB ranging. In an embodiment, the ranging data set may include at least one of session ID information for the UWB session associated with the secure ranging and session key information for protecting the UWB session.

The electronic device may transmit a request for transferring the ranging data set to the UWB subsystem to the secure component (1320). For example, the electronic device may transmit a request for transferring the data set to the UWB subsystem to the TEE (or TA in the TEE). In an embodiment, the ranging data set may be transferred from the secure component to the UWB subsystem by using a secure channel configured between the secure component and the UWB subsystem through a framework.

In an embodiment, transmitting the request for configuring the ranging data set may include calling a framework API (setRangingData() API) for requesting a secure component to configure the ranging data set, and the framework API may include an application ID for identifying an application that has invoked the framework API.

In an embodiment, transmitting the request for transferring the ranging data set to the UWB subsystem may include calling a framework API (PushRDStoUWBS () API) for requesting a secure component to transfer the ranging data set to the UWB subsystem, and the framework API may include an application ID for identifying an application that has invoked the framework API.

In an embodiment, the method may further include transmitting, by the framework, a command for starting the secure ranging to the UWB subsystem. The command for starting the secure ranging may include an application ID for identifying an application associated with the secure ranging.

In an embodiment, the secure channel between the secure component and the UWB subsystem may be an asymmetric key-based secure channel.

In an embodiment, the secure component may be a trusted execution environment (TEE) or a Strongbox.

FIG. 14 is a view illustrating a structure of a first electronic device according to an embodiment of the disclosure.

The first electronic device of FIG. 14 may be an electronic device (e.g., a smart ranging device) including a second secure component (e.g., TEE or SB).

Referring to FIG. 14, the first electronic device may include a transceiver 1410, a controller 1420, and a storage 1430. In the disclosure, the controller may be defined as a circuit or application-specific integrated circuit or at least one processor.

The transceiver 1410 may transmit and receive a signal to and from another electronic device. The transceiver 1410 may transmit and receive data using, e.g., UWB communication.

The controller 1420 may control the overall operation of the UWB in-band search method according to an embodiment proposed in the disclosure. For example, the controller 1420 may control inter-block signal flow to perform the operations according to the above-described flowchart. Specifically, the controller 1420 may control, e.g., the operation of the method for secure ranging described with reference to FIGS. 1 to 13.

The storage unit 1430 may store at least one of information transmitted/received via the transceiver 1410 and information generated via the controller 1420. For example, the storage unit 1430 may store information and data for secure ranging described above with reference to FIGS. 1 to 13.

FIG. 15 is a view illustrating a structure of a second electronic device according to an embodiment of the disclosure.

The second electronic device of FIG. 15 may be an electronic device (e.g., a smart ranging device or a ranging device) communicating with the first electronic device of FIG. 14.

Referring to FIG. 15, the second electronic device may include a transceiver 1510, a controller 1520, and a storage 1530. In the disclosure, the controller may be defined as a circuit or application-specific integrated circuit or at least one processor.

The transceiver 1510 may transmit and receive a signal to and from another electronic device. The transceiver 1510 may transmit and receive data using, e.g., UWB communication.

The controller 1520 may control the overall operation of the UWB in-band search method according to an embodiment proposed in the disclosure. For example, the controller 1520 may control inter-block signal flow to perform the operations according to the above-described flowchart. Specifically, the controller 1520 may control, e.g., the operation for secure ranging described with reference to FIGS. 1 to 13.

The storage unit 1530 may store at least one of information transmitted/received via the transceiver 1510 and information generated via the controller 1520. For example, the storage unit 1530 may store information and data for secure ranging described above with reference to FIGS. 1 to 13.

### <Embodiment B>

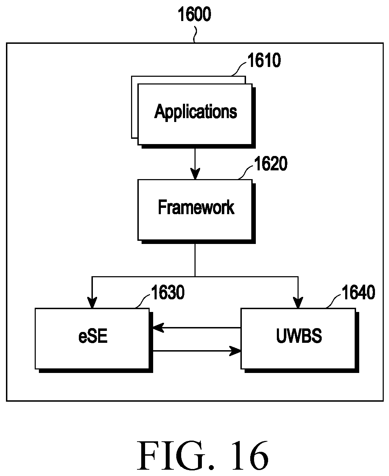

Embodiment B corresponds to an embodiment related to the attached mode described above. Hereinafter, embodiment B is exemplarily described with reference to FIGS. 16 to 27.

FIG. 16 illustrates an example configuration of a UWB device including an SE.

In the embodiment of FIG. 16, the UWB device 1600 is a secure component and may be a UWB device (e.g., FiRa smart device or FiRa device) including a secure element (e.g., eSE).

As described above, the SE is a safe security module based on the tamper resistant characteristics, and the eSE means a fixed SE fixed and used in the electronic device.

Referring to FIG. 16, the UWB device 1600 may include at least one application (UWB-enabled application) 1610, a framework 1620, a secure element 1630, and/or a UWBS 1640. The description of the UWB-enabled application 1610 and the framework 1620 may refer to the description made above with reference to FIGS. 1 to 3.

In an embodiment, the SE (e.g., eSE) 1630 may include a service applet (applet) and/or a secure UWB service (SUS) applet. The applet may include at least one application dedicated file (ADF) required to safely generate secure data (e.g., a ranging data set (RDS)). For example, each applet may include the ADF provided by each service provider SP. The ADF may be provided by the service provider in the key provisioning step. Further, the applet may transfer the RDS through the SUS applet to the UWBS.

In an embodiment, the RDS may include a ranging session key (UWB ranging session key) indicating the key used for securing the UWB ranging session and/or a session ID for identifying the RDS (or session associated with the RDS). In this case, the ranging session key and session ID should be the same in the initiator and the responder. Further, the RDS may further include at least one ranging parameter (e.g., angle of arrival (AoA), proximity distance), client-specific data and/or a multicast responder-specific key.

The UWBS 1640 manages UWB hardware. The UWBS 1640 may perform a UWB session with the UWBS of another ranging device. The UWBS 1640 may be managed by the framework 1620 and may receive an RDS required for secure ranging from the SE 1630.

In an embodiment, the components of UWB device 1600 may communicate with each other through a previously defined interface. For example, the application 1610 and the framework 1620 may communicate through a predefined application programming interface (API). The framework 1620 and the SE (eSE) 1630 may communicate through a predefined object management application programming interface (OMPI). The framework 1620 and the UWBS 1640 may communicate through a predefined UCI. The UWBS 1640 and the SE 1630 may communicate through a predefined SUS API. However, the above-described interfaces are merely examples of interfaces for the components to communicate with each other, and according to an embodiment, the components may communicate with each other using different types of interfaces.

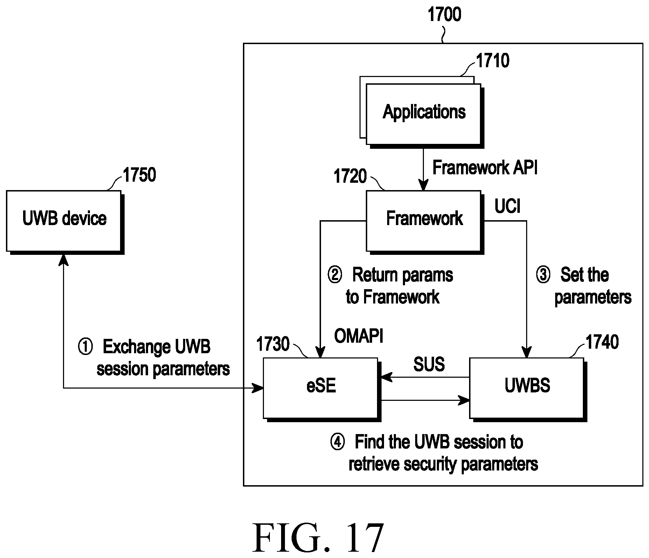

FIG. 17 illustrates operations of a UWB device including an SE.

The UWB device 1700 according to the embodiment of FIG. 17 may be the UWB device of FIG. 16. As illustrated, the UWB device 1700 may include at least one application (UWB-enabled application) 1710, a framework 1720, a secure element (e.g., eSE) 1730, and/or a UWBS 1740. The UWB device 1700 may communicate with another UWB device 1750. In an embodiment, the UWB device 1700 may operate as a controlee for receiving a control message (information) for UWB ranging from another UWB device 1750.

Referring to FIG. 17, in procedure 1 (operation 1), the UWB device 1700 may perform a procedure for exchanging UWB session parameters with another UWB device 1750. In an embodiment, the UWB device 1700 may use a secure channel configured using an OOB component (e.g., a BLE component) to exchange UWB session parameters. In an embodiment, the UWB session parameter may include a ranging session key (UWB ranging session key) indicating the key used for securing the UWB ranging session and/or a session ID for identifying the RDS (or session associated with the RDS). In an embodiment, the UWB session parameter may be generated by the applet of the UWB device 1700 and/or another UWB device 1750. The UWB session parameter exchanged through procedure 1 may be stored in the eSE 1730.

In procedure 2 (operation 2), the framework 1720 may request the UWB parameter from the eSE 1730, and the eSE 1730 may transfer (return) the UWB parameter to the framework 1720 in response to the request. In an embodiment, the framework 1720 and the eSE 1730 may use a predefined OMAPI for UWB parameter exchange. In an embodiment, the UWB parameter may include some or all of the UWB session parameters stored in the eSE 1730. For example, the UWB parameter may include a session ID in the UWB session parameter. The UWB parameter may further include some or all of information (e.g., controlee info) parameters of the UWB device stored in the eSE 1730.

In procedure 3 (operation 3), the framework 1720 and the UWBS 1740 may perform a procedure for setting a UWB parameter. In an embodiment, the framework 1720 may transfer the session ID to the UWBS 1740. The framework 1720 and the UWBS 1740 may use a predefined UCI for UWB parameter setting.

In procedure 4 (operation 4), the UWBS 1740 may perform an operation for obtaining a secure parameter from the eSE 1730. For example, the UWBS 1740 may find a UWB session to search for a secure parameter. In an embodiment, the UWBS 1740 may obtain the RDS from the eSE 1730 by using the session ID transmitted through the framework 1720. In this case, the UWBS 1740 may obtain the RDS using the secure channel set between the UWBS 1740 and the eSE 1730. In an embodiment, the UWBS 1740 may use a predefined SUS API (e.g., a SUS external API) to obtain a secure parameter.

Meanwhile, in the embodiment of FIG. 17, a UWB session parameter (e.g., session ID) is required for the framework 1720 to call the UWBS 1740 for, e.g., secure ranging. Accordingly, as in procedure 2 (operation 2), the UWB session parameter safely stored in the eSE 1730 should be decoded and transferred to the framework 1720. In this case, the secure parameter such as the session ID may be exposed, thereby causing the security problem. Further, in the embodiment of FIG. 17, an access rule should be set (e.g., R/W from remote/local) for all parameters, which may cause a burden on access control. Further, in the embodiment of FIG. 17, processing of a plurality of applications is limited due to computational performance and memory constraints of the eSE 1730. Embodiments for addressing such issues are described below with reference to the drawings.

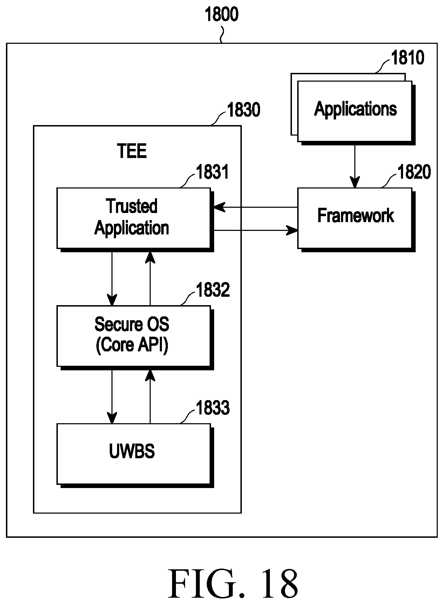

FIG. 18 is a view illustrating an example configuration of a UWB device including a TEE according to an embodiment of the disclosure.

Referring to FIG. 18, the UWB device 1800 includes at least one application (UWB-enabled application) 1810, a framework 1820, and/or a TEE 1830. The UWB device 1800 may further include an OOB component. In the disclosure, the framework 1820, the UWBS 1833, the UWB-enabled application 1810, and the OOB component of FIG. 18 may basically follow the definitions/descriptions of the framework, the UWBS, the UWB-enabled application, and the OOB component described above with reference to FIGS. 1 to 3, except for the new definitions/descriptions.

Referring to FIG. 18, the TEE 1830 may include at least one trusted application (TA) 1831, a secure OS (trusted OS) 1832, and/or a UWBS 1833. In the embodiment of FIG. 18, as illustrated, the UWBS 1833 may be included in the TEE area. In other words, the UWBS 1833 may be directly connected to the secure OS 1832 of the TEE 1830. Accordingly, the UWBS 1833 may have higher reliability and security levels than those located outside the TEE area.

The TEE 1830 is an environment in which code is executed, and may have a high level of trust. In the TEE 1830, trust may mean that it has a higher level of trust in the validity, isolation, and access control for items stored in the TEE area (space) as compared with general-purpose software environments. Accordingly, the TA 1831 and secure OS 1832 executed in the TEE area may have higher trust. In an embodiment, the TEE 1830 (or TA 1831) may communicate with another component through a pre-defined interface (e.g., TEE client API). For example, the TEE 1830 (or the TA 1831) may communicate with the application 1810 through a predefined interface (e.g., the TEE Client API).

The TA 1831 is an application of the TEE 1830 and is referred to as a TA to be distinguished from an uncertain characteristic of an application in a Rich Operating System Execution Environment (REE). In the disclosure, the TA 1831 (or the ADF of the TA) may serve to generate/store/transfer the RDS and may serve as a contact point for the framework 1820 (or the UWBS 1833 communicating with the framework). In the disclosure, the TA 1831 may be identified by the ID (e.g., UUID) defined for the TA. In the disclosure, the TA 1831 may also be denoted as a FiRa TA. As described above, the RDS may include a ranging session key (UWB ranging session key) indicating the key used for securing the UWB ranging session and/or a session ID for identifying the RDS (or session associated with the RDS). In this case, the ranging session key and session ID should be the same in the initiator and the responder. Further, the RDS may further include at least one ranging parameter (e.g., angle of arrival (AoA), proximity distance), client-specific data and/or a multicast responder-specific key.

The secure OS 1832 is an OS hosted by the TEE 1830 and may be a trusted OS distinguished from the rich OS (e.g., Android) hosted by the rest (REE) of the device. The TA 1831 and the secure OS 1832 may communicate through a predefined TEE core API. In general, the TA 1831 may operate by downloading a command to an external device (peripheral) through the secure OS 1832 using the TEE core API. In the disclosure, secure OS 1832 may be referred to as driver TA.

Meanwhile, as in the embodiments of FIGS. 16 and 17, when the secure component of the UWB device is the eSE, communication between the UWBS and the eSE is performed through a method in which the UWBS transmits a command to the eSE. On the other hand, as in the embodiment of FIG. 18, in the case of TEE, in general, TA communicates with an external device through a method of transmitting a command to the external device through a secure OS. Accordingly, when the UWBS is recognized as only one external device and the TA and the UWBS communicate through the above-described general interfacing method, it may be burdensome to separately implement the UWBS chipset for eSE and the UWBS chipset for TEE. Therefore, a new method for interfacing between TA and UWBS needs to be considered.

Hereinafter, embodiments in which the TA and UWBS included in TEE communicate with each other will be exemplarily described with reference to each drawing. In the following embodiments, it is described that the UWBS communicates with the TA to obtain the RDS stored in the TA, but the disclosure is not limited thereto, and it is obvious to those skilled in the art that the following description may be identically or similarly applied to embodiments in which the UWBS obtains other types of security data/parameters stored in the TA.

### Embodiment 1: An embodiment in which UWBS pulls RDS from TA (e.g., an embodiment in which UWBS operates as an initiator for initiating a procedure for transferring (acquiring) RDS, and TA operates as a responder in response thereto)

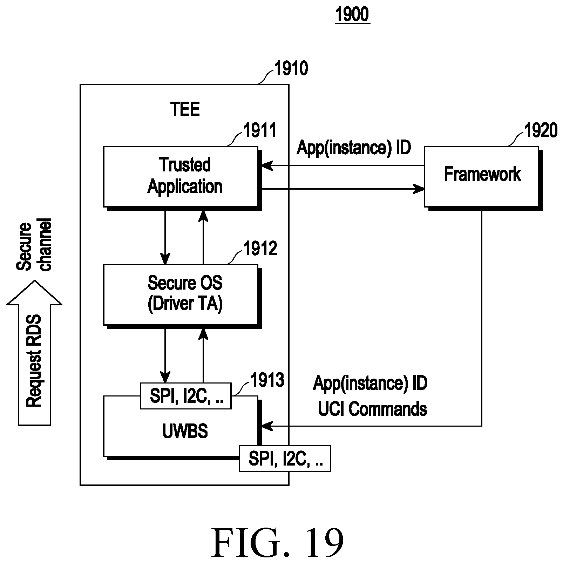

Hereinafter, embodiment 1 is exemplarily described with reference to FIGS. 19 to 21.

FIG. 19 illustrates operations of a UWB device including a TEE according to an embodiment of the disclosure.

The UWB device of FIG. 19 may be, e.g., the UWB device of FIG. 18.

Referring to FIG. 19, a UWB device 1900 may include a TEE 1910 and a framework 1920. In an embodiment, the TEE 1910 may include a TA 1911, a secure OS 1912, and/or a UWBS 1913. In the embodiment of FIG. 19, the UWBS 1913 included in the TEE area may operate as a subject that initiates the RDS acquisition procedure, rather than simply performing the role as one external device (peripheral) from the perspective of the TA (or secure OS) 1911. For example, the UWBS 1913 may operate as an initiator for transferring an RDS acquisition (request) command for secure ranging. In this case, the TA 1911 may operate as a responder transferring the RDS in response to the RDS acquisition command transferred from the UWBS 1913. Accordingly, in the embodiment of FIG. 19, the TA 1911 does not operate in a manner to directly push the RDS to the UWBS 1913 using the TEE core API.

In the embodiment of FIG. 19, the UWBS 1913 may request the TA 1911 for the RDS for secure ranging, and the TA 1911 may transfer the RDS to the UWBS 1913 in response to the request. In this case, regardless of the type of the secure component, the UWBS may be implemented to perform a consistent operation (role) for the secure component from the perspective of the UWBS 1913. In other words, regardless of whether the secure component is TEE or SE, the UWBS operation (role) for the secure component for obtaining the RDS may be configured in the same manner. Therefore, it is possible to design the UWBS chipset regardless of the secure component, thereby facilitating the design of the UWBS chipset.

Further, in the embodiment of FIG. 19, as described above, the TA 1911 may not perform a procedure of pushing the RDS using the previously defined TEE core API. Therefore, it is necessary to establish a secure channel for the entire path between the UWBS 1913 and the TA 1911 including the path between the UWBS 1913 and the secure OS 1912.

Further, in the embodiment of FIG. 19, a hardware interface (e.g., a serial peripheral interface (SPI), an inter-integrated circuit (I2C), or the like) for the UWBS 1913 may be separately defined for TEE and REE, respectively. In this case, depending on the required security level, a specific procedure (processing) may be flexibly configured as using an interface for TEE or an interface for REE. For example, RDS-related processing for secure ranging may be configured to be performed through an interface for TEE, and for example, processing for general ranging may be set to be performed through an interface for REE.

Further, in the embodiment of FIG. 19, instead of transmitting the command including the session ID to the UWBS 1913, the framework 1920 may transmit the command including the application ID and/or the instance ID (random ID) of the application to the TA 1911 and/or the UWBS 1913.

Here, the application ID may be an ID for identifying an application, and the instance ID may be an ID (e.g., a random value allocated for each session) for identifying a session instance associated with an application identified by the application ID. For example, when a plurality of sessions (session instances) are set for one application (application instance), each session of the corresponding application may be identified by the application ID and the instance ID. As another example, when only one session is set for one application, the session of the corresponding application may be identified by the instance ID (or application ID). As described above, when the application ID and/or the instance ID are used instead of the session ID to identify the session, the security problem caused by the session ID (secure parameter) being exposed to the framework 1920 to obtain the RDS may be solved. In the disclosure, the instance ID may be referred to as a session instance ID.

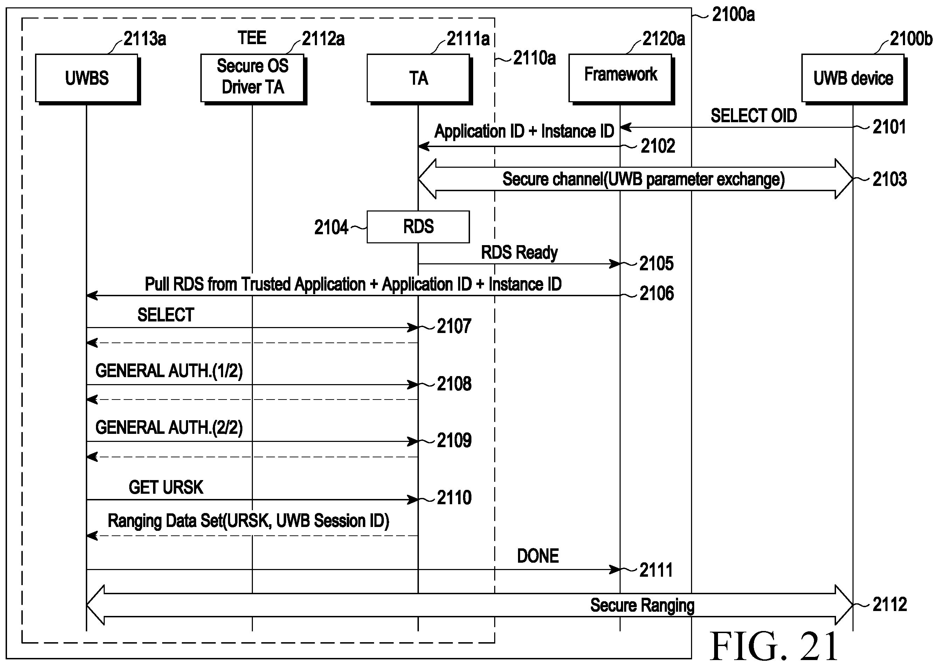

An example operation of the embodiment of FIG. 19 is described below with reference to FIG. 21.

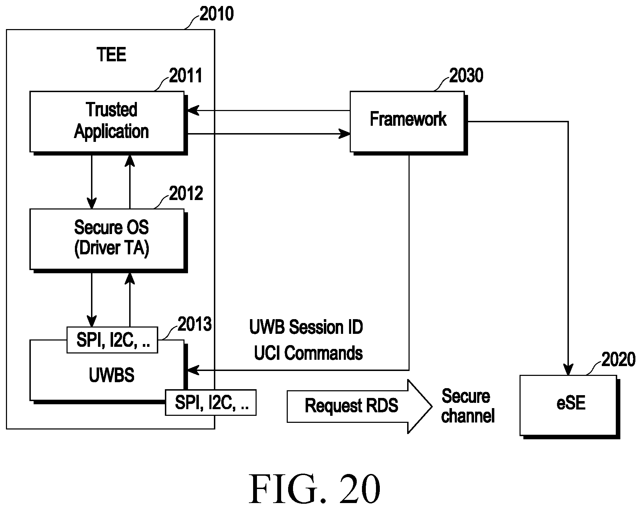

FIG. 20 illustrates operations of a UWB device including a TEE and an SE, according to an embodiment of the disclosure.

Referring to FIG. 20, the UWB device 2000 may include a TEE 2010, an SE (e.g., eSE) 2020, and a framework 2030. In an embodiment, the TEE 2010 may include a TA 2011, a secure OS 2012, and/or a UWBS 2013.

The embodiment of FIG. 20 corresponds to an embodiment of the hybrid method in which the TEE 2010 and the SE 2020 are used together as secure components. Therefore, it is necessary to efficiently configure the operation of the UWBS 2013 for each secure component. In other words, it is necessary to implement it in a way that increases compatibility.

The configuration and operation of the TEE 2010 of the embodiment of FIG. 20 may follow the configuration and operation of the TEE 1910 of the embodiment of FIG. 19. For example, the UWBS 2013 may be included in the TEE area, and hardware interfaces (e.g., SPI, I2C, etc.) for the UWBS 2013 may be separately defined for TEE and REE, respectively. Further, the UWBS 2013 may request the TA 2011 for the RDS for secure ranging, and the TA 2011 may transfer the RDS to the UWBS 2013 in response to the request. Further, instead of transmitting the command including the session ID to the UWBS 2013, the framework 2030 may transmit the command including the application ID and/or the instance ID (random ID) of the application to the TA 2011 and/or the UWBS 2013 to obtain the RDS.

In the embodiment of FIG. 20, because two types of secure components are included in the UWB device 2000, the UWB device 2000 may operate in two operation modes. For example, the UWB device 2000 may operate in a TEE mode or an SE mode. Here, the TEE mode may be a mode in which the framework 2030 and the UWBS 2013 operate with the TA 2011 (i.e., a mode using the TA 2011 as a secure component), and the SE mode may be a mode in which the framework 2030 and the UWBS 2013 operate with the SE 2020 (i.e., a mode using the SE 2020 as a secure component). In an embodiment, in the TEE mode, the UWBS 2013 may obtain secure data (e.g., RDS) from the TEE 2010 (e.g., the TA 2011 of the TEE), and in the SE mode, the UWBS 2013 may obtain secure data (e.g., RDS) from the SE 2020 (e.g., the SUS applet of the eSE).

In the TEE mode, as described above with reference to FIG. 19, the UWBS 2013 may transmit a request (command) for obtaining the RDS to the TA 2011, and the TA 2011 may transmit the RDS to the UWBS 2013 in response to the request. Similarly, in the SE mode, the UWBS 2013 may transmit a request (command) for obtaining the RDS to the SUS applet of the eSE 2020, and the SUS Apple of the eSE 2020 may transmit the RDS to the UWBS 2013 in response to the request. As described above, in both modes, the UWBS 2013 may operate as an initiator for initiating an RDS acquisition procedure. In other words, the UWBS 2013 may perform the same role and operation to obtain the RDS regardless of the type of the secure component. For example, the UWBS 2013 may transfer the same commands for obtaining the RDS to the secure component TEE (TA) or SE. Therefore, it has the advantage that UWBS chip design is easy.

Meanwhile, the command of the framework 2030 for the UWBS 2013 may differ depending on the operation mode. For example, in the TEE mode, the framework 2030 may transfer a command including the application ID and/or the instance ID to the UWBS 2013 and/or the TA 2011, and in the SE mode, the framework 2030 may transfer a command including the session ID to the UWBS 2013.

As such, in the case of the hybrid method in which the TEE 2010 and the SE 2020 are used together, embodiment 1 (an embodiment in which the UWBS pulls the RDS from the secure component TA) having high compatibility has an advantage in terms of chip design. As such, in the hybrid case, the method of embodiment 1 may be more advantageous than the method of embodiment 2 to be described later.

FIG. 21 illustrates a method in which a first UWB device performs security ranging with a second UWB device according to an embodiment of the disclosure.

In the embodiment of FIG. 21, the first UWB device 2100a may be the UWB device of FIG. 18, and the second UWB device 2100b may be a device performing secure ranging with the first UWB device 2100a. As illustrated, the first UWB device 2100a may include a TEE 2110a including a UWBS 2113a, a secure OS 2112a and a TA 2111a, and a framework 2120a.

In the embodiment of FIG. 21, the first UWB device 2100a corresponds to a UWB device operating according to the scheme (e.g., embodiment 1) described above with reference to FIG. 19.

Referring to FIG. 21, in operation 2101, the second UWB device 2100b may transmit a SELECT command for selecting an object identified by an object ID (OID) to the first UWB device 2100a. In an embodiment, the SELECT command may include an OID. In an embodiment, the application may have a data structure including a root-level GDF and at least one ADF. In this case, the object may be one of at least one ADF included in the application. In an embodiment, the ADF may serve to generate/store/transfer RDS.

In operation 2102, the framework 2120a of the first UWB device 2100a may identify an application (e.g., an application including an ADF identified by the OID) associated with the object identified by the OID, and may transmit the application ID and/or the instance ID (random ID) of the application to the TA 2111a. As described above, the application ID may be an ID for identifying an application, and the instance ID may be an ID (e.g., a random value allocated for each session) for identifying a session instance associated with an application identified by the application ID. For example, when a plurality of sessions (session instances) are set for one application (application instance), each session of the corresponding application may be identified by the application ID and the instance ID. As another example, when only one session is set for one application, the session of the corresponding application may be identified by the instance ID (or application ID). As described above, when the application ID and/or the instance ID are used instead of the session ID to identify the session, the security problem caused by the session ID (secure parameter) being exposed to the framework to obtain the RDS may be solved. In the disclosure, the instance ID may be referred to as a session instance ID.

In operation 2103, the first UWB device 2100a and the second UWB device 2100b may establish a secure channel. The secure channel may be established between the TA 2111a of the first UWB device 2100a and a secure component (e.g., TA or SUS applet) of the second UWB device 2100b. In an embodiment, the secure channel may be established through an OOB such as BLE. Through this secure channel, UWB parameters may be exchanged.

In operation 2104, the TA 2111a may generate/prepare an RDS used for secure ranging, based on the exchanged UWB parameter.

In operation 2105, the TA 2111a may transfer a notification indicating that the RDS is ready to the framework 2120a.

In operation 2106, the framework 2120a may transmit a PULL command to take the RDS from the TA 2111a to the UWBS 2113a. In an embodiment, the framework 2120a may transmit the PULL command together with the application ID and/or the instance ID. For example, the framework 2120a may transmit a PULL command including the application ID and/or the instance ID.

In operation 2107, the UWBS 2113a may transmit the SELECT command to the TA 2111a, and the TA 2111a may transmit the SELECT response corresponding to the SELECT command to the UWBS 2113a. In an embodiment, the SELECT command may include identification information (e.g., UUID) about the TA 2111a. Accordingly, the TA 2111a for searching for the RDS may be selected.

In operation 2108, the UWBS 2113a may transmit a first authentication command (GENERAL AUTHENTICATE (Part 1/2: GET RANDOM)) for obtaining a random challenge from the TA 2111a to the TA 2111a, and the TA 2111a may transmit a response corresponding to the first authentication command to the UWBS 2113a. Further, in operation 2109, in response to the random challenge, the UWBS 2113a may transmit a second authentication command (GENERAL AUTHENTICATE (Part 1 2/2: Mutual Authentication)) for establishing a secure channel with the TA 2111a to the TA 2111a together with the encrypted challenge, and the TA 2111a may transmit a response corresponding to the second authentication command to the UWBS 2113a. Through operations 2108 to 2109, a secure channel may be established between the UWBS 2113a and the TA 2111a.

In operation 2110, the UWBS 2113a may transmit a GET command (GET URSK) for obtaining the RDS to the TA 2111a, and the TA 2111a may transmit a response corresponding to the GET command to the UWBS 2113a. In an embodiment, the GET command may include a session ID (UWB session ID) for identifying the RDS, and the response may include RDS data (e.g., ranging session key) corresponding to the session ID. Thus, the UWBS may obtain the RDS data.

In operation 2111, the UWBS 2113a may transfer a notification indicating that the UWBS 2113a normally obtains the RDS data to the framework 2120a. In an embodiment, this notification may be transmitted in response to the PULL command of operation 2106.

In operation 2112, the UWBS 2113a may perform secure ranging with the UWBS of the second UWB device 2100b using the obtained RDS data. For example, the UWBS 2113a may perform secure ranging with the UWBS of the second UWB device 2100b using the STS generated using the ranging session key of the RDS.

As described above, when the UWB device operates according to embodiment 1, it is possible to design the UWBS regardless of the secure component, thereby facilitating the design of the UWBS chipset. However, it is difficult to utilize the existing API of the TA, and a secure channel for the entire path between the UWBS and the TA including the path between the UWBS and the secure OS needs to be established.

Each of the above-described operations exemplifies a specific operation performed by each component, and the order of operations is not limited to the order described above. For example, each operation may be performed in an order different from the described order.

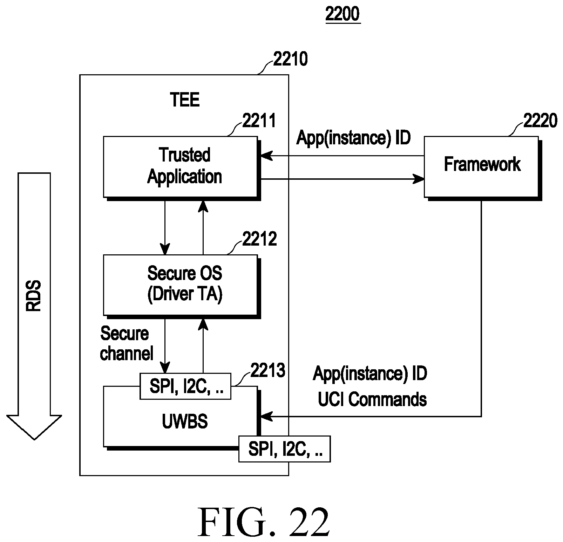

Hereinafter, an embodiment (embodiment 2) different from embodiment 1 focusing on compatibility is exemplarily described with reference to FIGS. 22 to 23. Embodiment 2 may be, e.g., an efficiency-oriented embodiment.

### Embodiment 2: An embodiment in which the TA pushes the RDS to the UWBS (e.g., an embodiment in which the TA operates as an initiator initiating a procedure for transferring (obtaining) the RDS, and the UWBS operates as a responder in response thereto)

Hereinafter, embodiment 2 is exemplarily described with reference to FIGS. 22 to 23.

FIG. 22 illustrates operations of a UWB device including a TEE according to another embodiment of the disclosure.

The UWB device of FIG. 22 may be, e.g., the UWB device of FIG. 18.

Referring to FIG. 22, a UWB device 2200 may include a TEE 2210 and a framework 2220. In an embodiment, the TEE 2210 may include a TA 2211, a secure OS 2212, and/or a UWBS 2213. In the embodiment of FIG. 22, the UWBS 2213 included in the TEE area serves as one external device (peripheral) in terms of the TA 2211 (or the secure OS 2212). Accordingly, unlike the embodiment of FIG. 19, in the embodiment of FIG. 22, the TA 2211 may operate in a manner to directly push the RDS to the UWBS 2213 using the TEE core API. In other words, regardless of the request of the UWBS 2213, the TA 2211 may transmit the RDS to the UWBS 2213. Therefore, it has the advantage of being easy to implement. In other words, embodiment 2 is more advantageous in terms of operational efficiency of TA than embodiment 1.

Further, in the embodiment of FIG. 22, since the secure communication is performed between the TA 2211 and the secure OS 2212 through the predefined TEE core API, only the secure channel for the path between the secure OS 2212 and the UWBS 2213, not the entire path, needs to be configured for RDS transfer.

Further, in the embodiment of FIG. 22, a hardware interface (e.g., an SPI, an I2C, or the like) for the UWBS 2213 may be separately defined for TEE and REE, respectively. In this case, depending on the required security level, a specific procedure (processing) may be flexibly configured as using an interface for TEE or an interface for REE. For example, RDS-related processing for secure ranging may be configured to be performed through an interface for TEE, and for example, processing for general ranging may be set to be performed through an interface for REE.

Further, in the embodiment of FIG. 22, instead of transmitting the command including the session ID to the UWBS 2213, the framework 2220 may transmit the command including the application ID and/or the instance ID (random ID) of the application to the TA 2211 and/or the UWB S 2213.

Here, the application ID may be an ID for identifying an application, and the instance ID may be an ID (e.g., a random value allocated for each session of the application) for identifying a session instance associated with an application identified by the application ID. For example, when a plurality of sessions (session instances) are set for one application (application instance), each session of the corresponding application may be identified by the application ID and the instance ID. As another example, when only one session is set for one application, the session of the corresponding application may be identified by the instance ID (or application ID). As described above, when the application ID and/or the instance ID are used instead of the session ID to identify the session, the security problem caused by the session ID (secure parameter) being exposed to the framework to obtain the RDS may be solved. In the disclosure, the instance ID may be referred to as a session instance ID.

However, in the case of the embodiment (embodiment 2) of FIG. 22, when the SE (eSE) is used together with the TEE 2210, the operation of the UWBS 2213 for the TEE 2210 and the operation of the UWBS 2213 for the SE should be separately implemented, and thus, as compared to the embodiment (embodiment 1) of FIG. 19, it is not easy in terms of chip design. Therefore, embodiment 2 may be more advantageous in a case using only TEE as a secure component.

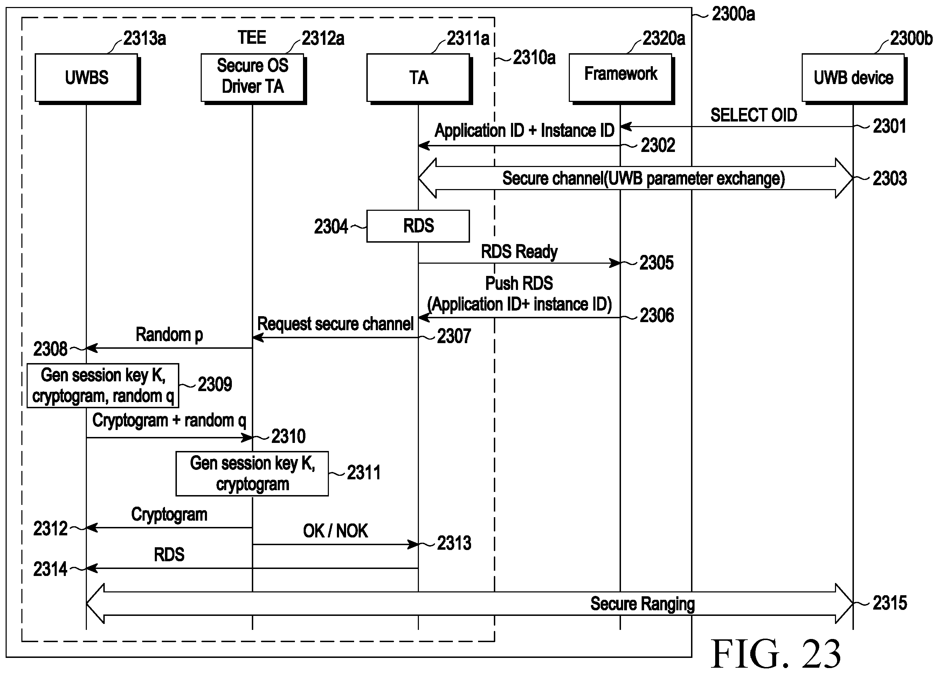

An example operation of the embodiment of FIG. 22 is described below with reference to FIG. 23.

FIG. 23 illustrates a method in which a first UWB device performs secure ranging with a second UWB device, according to another embodiment of the disclosure.

In the embodiment of FIG. 23, the first UWB device 2300a may be the UWB device of FIG. 18, and the second UWB device 2300b may be a device performing secure ranging with the first UWB device 2300a. As illustrated, the first UWB device 2300a may include a TEE 2310a including a UWBS 2313a, a secure OS 2312a and a TA 2311a, and a framework 2320a.

In the embodiment of FIG. 23, the first UWB device 2300a corresponds to a UWB device operating according to the scheme (e.g., embodiment 2) described above with reference to FIG. 22.

Referring to FIG. 23, in operation 2301, the second UWB device 2300b may transmit a SELECT command for selecting an object identified by an object ID (OID) to the first UWB device 2300a. In an embodiment, the SELECT command may include an OID. In an embodiment, the application may have a data structure including a root-level GDF and at least one ADF. In this case, the object may be one of at least one ADF. In an embodiment, the ADF may serve to generate/store/transfer RDS.

In operation 2302, the framework 2320a of the first UWB device 2300a may identify an application (e.g., an application including an ADF identified by the OID) associated with the object identified by the OID, and may transmit the application ID and/or the instance ID (random ID) to the TA 2311a.

Here, the application ID may be an ID for identifying an application, and the instance ID may be an ID (e.g., a random value allocated for each session) for identifying a session instance associated with an application identified by the application ID. For example, when a plurality of sessions (session instances) are set for one application (application instance), each session of the corresponding application may be identified by the application ID and the instance ID. As another example, when only one session is set for one application, the session of the corresponding application may be identified by the instance ID (or application ID). As described above, when the application ID and/or the instance ID are used instead of the session ID to identify the session, the security problem caused by the session ID (secure parameter) being exposed to the framework to obtain the RDS may be solved. In the disclosure, the instance ID may be referred to as a session instance ID.

In operation 2203, the first UWB device 2300a and the second UWB device 2300b may establish a secure channel. The secure channel may be established between the TA 2311a of the first UWB device 2300a and a secure component (e.g., TA or SUS applet) of the second UWB device 2300b. In an embodiment, the secure channel may be established through an OOB such as BLE. Through this secure channel, UWB parameters may be exchanged.

In operation 2304, the TA 2311a may generate an RDS used for secure ranging, based on the exchanged UWB parameter.

In operation 2305, the TA 2311a may transfer a notification indicating that the RDS is ready to the framework 2320a.

In operation 2306, the framework 2320a may transmit, to the TA 2311a, a PUSH command for sending the RDS to the UWBS (i.e., the PUSH command for the TA to push the RDS to the UWBS). In an embodiment, the framework 2320a may transmit the PUSH command together with the application ID and the instance ID. For example, the framework 2320a may transmit a PUSH command including the application ID and the instance ID.

In operation 2307, the TA 2311a may transmit a request for establishing a secure channel between the secure OS 2312a and the UWBS 2313a to the secure OS 2312a. Since the TEE 2310a is in a secure state between the TA 2311a and the secure OS 2312a, it is necessary to establish a secure channel between the secure OS 2312a and the UWBS 2313a in order to safely transfer the RDS generated in the TA 2311a to the UWBS 2313a. Hereinafter, a procedure for establishing a secure channel between the secure OS 2312a and the UWBS 2313a is described through operations 2308 to 2312.

In operation 2308, the secure OS 2312a may generate a random value p and transmit the generated random value p to the UWBS 2313a. In operation 2309, the UWBS 2313a may generate a session key K (e.g., a session key for securing a message) based on the random value p. For example, the UWBS 2313a may generate the session key K based on the received random value p and/or the random value q generated by the UWBS 2313a. Further, the UWBS 2313a may generate encrypted data based on the session key K.

In operation 2310, the UWBS 2313a may transmit the generated cryptogram and/or random value q to the secure OS 2312a. In operation 2311, the secure OS 2312a may generate the session key K based on the random value q. For example, the secure OS 2312a may generate the session key K based on the received random value q and/or the random value p generated by the secure OS 2312a. Also, the secure OS 2312a may generate encrypted data (cryptogram) based on the session key K.

In operation 2312, the secure OS 2312a may transmit the generated cryptogram to the UWBS 2313a. Accordingly, the same session key K may be shared between the secure OS 2312a and the UWBS 2313a, and subsequent operations may be protected using the session key K. Through operations 2308 to 2312, a secure channel may be established between the UWBS 2313a and the secure OS 2312a.

In operation 2313, the secure OS 2312a may transmit, to the TA 2311a, a notification OK indicating that the secure channel is established between the UWBS 2313a and the secure OS 2312a or a notification NOK indicating that the secure channel is not established between the UWBS 2313a and the secure OS 2312a. In an embodiment, this notification may be transmitted in response to the request in operation 2307.

In operation 2314, when the secure channel between the UWBS 2313a and the secure OS 2312a is established, the TA 2311a may transmit the RDS to the UWBS 2313a through the secure channel. For example, the TA 2311a may transmit the RDS to the UWBS 2313a through the secure OS 2312a using the session key K. For example, the TA 2311a may encrypt the RDS using the session key K and transfer the encrypted RDS to the UWBS 2313a.

In operation 2315, the UWBS 2313a may perform secure ranging with the UWBS of the second UWB device 2300b using the obtained RDS data. For example, the UWBS 2313a may perform secure ranging with the UWBS of the second UWB device 2300b using the STS generated using the ranging session key of the RDS.

Each of the above-described operations exemplifies a specific operation performed by each component, and the order of operations is not limited to the order described above. For example, each operation may be performed in an order different from the described order.

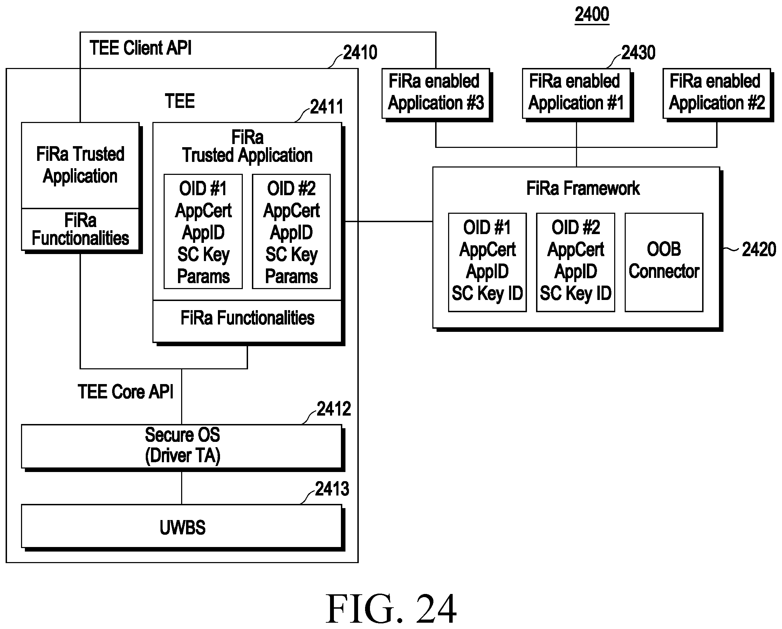

FIG. 24 illustrates a configuration of a UWB device according to an embodiment of the disclosure.

The UWB device of FIG. 24 may be an example of the UWB device of FIG. 18.

Referring to FIG. 24, the UWB device 2400 may include a TEE 2410, a framework 2420, and at least one application (UWB-enabled application) 2430. At least one application 2430 is located outside the TEE and may be distinguished from the TA 2411, which is an application inside the TEE. The application 2430 outside the TEE has lower security than the TA 2411. In the disclosure, the framework 2420 may be referred to as a FiRa framework, the application 2430 may be referred to as a FiRa application, and the TA 2411 may be referred to as a FiRa TA.

In an embodiment, the TEE 2410 may include at least one TA 2411, a secure OS 2412, and/or a UWBS 2413. The TA 2411 and the secure OS 2412 may communicate through the TEE core API, and the TA 2411 and another component (e.g., the application 2430) outside the TEE may communicate through the TEE client API.

In an embodiment, the TA 2411 may include at least one ADF. The ADF may be identified by the OID. For example, as illustrated, the TA 2411 may include an ADF identified by OID#1 and an ADF identified by OID#2. In this case, each ADF may include an application certificate (AppCert), an application ID (AppID), an instance ID, and/or a secure channel key parameter (SC key parameter) (e.g., secure channel key ID) of the corresponding application.

In an embodiment, the framework 2420 may include at least one of an application certificate (AppCert), an application ID (AppID), an instance ID, and/or a secure channel key parameter (SC key parameter) (e.g., secure channel key ID) stored in each ADF. Accordingly, the framework 2420 may identify the message transferred from the external UWB device and connect it to the specific TA 2411. For example, when a specific OID is invoked from the external UWB device, the framework 2420 may identify it and transfer the APP ID and/or the instance ID of the application associated with the OID to the TA 2411, thereby allowing the TA 2411 to identify the session of the corresponding application. In this case, according to a preset method, the TA 2411 may transfer the RDS associated with the corresponding session to the UWBS 2413 in response to the request of the UWBS 2413 or push the RDS associated with the corresponding session to the UWBS 2413 regardless of the request of the UWBS 2413.

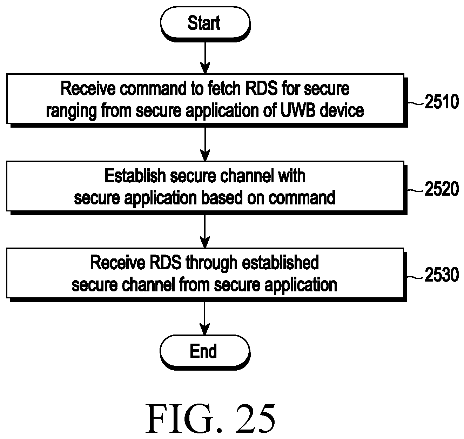

FIG. 25 is a flowchart illustrating a method of a UWB device according to an embodiment of the disclosure.

In the embodiment of FIG. 25, the UWB device may be the UWB device of FIG. 18 or the UWB device of FIG. 24. The operation of the UWB device of FIG. 25 may be an operation according to embodiment 1 described with reference to FIGS. 19 to 21.

Referring to FIG. 25, the UWB subsystem may receive, from the framework, a command (PULL command) to fetch the ranging data set RDS for secure ranging from the secure application TA (2510).

The UWB subsystem may establish a secure channel with the secure application based on the command (2520). A procedure for establishing a secure channel between the UWB subsystem and the secure application may be described with reference to FIG. 21.

The UWB subsystem may receive the RDS from the secure application through the set secure channel (2530). In an embodiment, the secure application may transfer the RDS in response to the request of the UWB subsystem. The RDS transfer procedure may refer to the description of FIG. 9D.

In an embodiment, the UWB subsystem and the secure application may be included in the TEE area, and the RDS may include a ranging session key used to secure the UWB ranging session.

In the embodiment, the PULL command may include at least one of the application ID of the application or the instance ID associated with one of at least one session configured by the application.

In an embodiment, a first interface for communicating with a component in the TEE area and a second interface for communicating with a component other than the TEE area may be configured for the UWB subsystem.

In an embodiment, the framework may be included outside the TEE area.

In an embodiment, the UWB subsystem may perform secure ranging with the UWB subsystem of another UWB device by using the ranging session key included in the RDS.

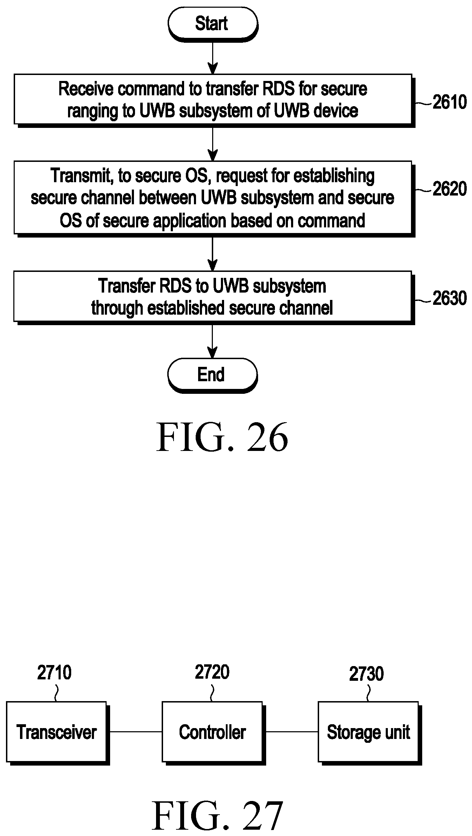

FIG. 26 is a flowchart illustrating a method of a UWB device according to another embodiment of the disclosure.

In the embodiment of FIG. 26, the UWB device may be the UWB device of FIG. 18 or the UWB device of FIG. 24. The operation of the UWB device of FIG. 26 may be an operation according to embodiment 1 described with reference to FIGS. 19 to 21.

Referring to FIG. 26, the secure application TA may receive, from the framework, a command to transfer the ranging data set RDS for secure ranging to the UWB subsystem (2610).

The secure application may transmit a request for establishing a secure channel between the secure OS of the secure application and the UWB subsystem to the secure OS based on the command (2620). The secure channel establishment procedure between the secure OS and the UWB subsystem may be described with reference to FIG. 23.

The secure application may transfer the RDS to the UWB subsystem through the set secure channel (2630).

FIG. 27 is a view illustrating a structure of an electronic device according to an embodiment of the disclosure.

In the embodiment of FIG. 27, the electronic device may correspond to the UWB device of FIG. 18 or may be an electronic device including the UWB device of FIG. 18 or an electronic device included in some components of the UWB device of FIG. 18.

Referring to FIG. 27, the electronic device may include a transceiver 2710, a controller 2720, and a storage unit 2730. In the disclosure, the controller may be defined as a circuit or application-specific integrated circuit or at least one processor.

The transceiver 2710 may transmit and receive signals to/from another entity. The transceiver 2710 may transmit/receive data for UWB ranging.

The controller 2720 may control the overall operation of the electronic device according to an embodiment. For example, the controller 2720 may control inter-block signal flow to perform the operations according to the above-described flowchart. Specifically, the controller 2720 may control the operations of the electronic device described above with reference to FIGS. 13 to 26.

The storage unit 2730 may store at least one of information transmitted/received via the transceiver 2710 and information generated via the controller 2720. For example, the storage unit 2730 may store information and data necessary for the secure ranging described with reference to FIGS. 13 to 26. In the above-described specific embodiments of the disclosure, the components included in the disclosure were represented in singular or plural form according to the specific embodiment presented. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Although specific embodiments of the present invention have been described above, various changes may be made thereto without departing from the scope of the present invention. Thus, the scope of the invention should not be limited to the above-described embodiments, and should rather be defined by the following claims.

## Claims

1. A method of an electronic device (810, 2300a) for performing secure ranging with an external electronic device (820, 2300b), the method comprising:
transmitting, from a framework (811, 2320a) of the electronic device (810, 2300a) to a secure component (813) of the electronic device (810, 2300a), a request to set a ranging data set for the secure ranging, wherein setting the ranging data set is based on UWB parameters which are exchanged via an established first secure channel between the electronic device (810, 2300a) and the external electronic device (820, 2300b);
transmitting, from the framework (811, 2320a) to the secure component (813), a request to transfer the ranging data set to an ultra-wide band, UWB, subsystem (812, 2313a) of the electronic device (810, 2300a); and
transferring the ranging data set, from the secure component (813) to the UWB subsystem (812, 2313a), using a second secure channel established between the secure component and the UWB subsystem (812, 2313a).

2. The method of claim 1,
wherein transmitting the request to set the ranging data set comprises invoking a framework application programming interface, API, to request the secure component (813) to set the ranging data set, wherein the framework API comprises an application ID for identifying an application invoking the framework API.

3. The method of claim 1, wherein transmitting the request to transfer the ranging data set to the UWB subsystem (812, 2313a) comprises invoking a framework API to request the secure component (813) to transfer the ranging data set to the UWB subsystem (812, 2313a), wherein the framework API includes an application ID for identifying an application invoking the framework API.

4. The method of claim 1, wherein transmitting the request to transfer the ranging data set to the UWB subsystem (812, 2313a) comprises transferring, from an application associated with the secure ranging to the UWB subsystem (812, 2313a), a command to obtain the ranging data set from the secure component.

5. The method of claim 1, wherein the ranging data set comprises at least one of session ID information for a UWB session associated with the secure ranging and session key information for protecting the UWB session.

6. The method of claim 1, further comprising transmitting, by the framework (811, 2320a), a command to start the secure ranging to the UWB subsystem (812, 2313a), wherein the command to start the secure ranging comprises an application ID for identifying an application associated with the secure ranging.

7. The method of claim 1, wherein the second secure channel between the secure component (813) and the UWB subsystem (812, 2313a) is an asymmetric key-based secure channel.

8. The method of claim 1, wherein the secure component (813) is a trusted execution environment, TEE, (2310a) or a Strongbox.

9. An electronic device (810, 2300a) for performing secure ranging with an external electronic device (820, 2300b), comprising:
a memory; and
a processor connected to the memory, the processor configured to:
transmit, from a framework (811, 2320a) of the electronic device (810, 2300a) to a secure component (813) of the electronic device (810, 2300a), a request to set a ranging data set for the secure ranging, wherein setting the ranging data set is based on UWB parameters which are exchanged via an established first secure channel between the electronic device (810, 2300a) and the external electronic device (820, 2300b);
transmit, from the framework (811, 2320a) to the secure component (813), a request to transfer the ranging data set to an ultra-wide band, UWB, subsystem (812, 2313a) of the electronic device (810, 2300a); and
transfer the ranging data set, from the secure component (813) to the UWB subsystem (812, 2313a), using a second secure channel established between the secure component (813) and the UWB subsystem (812, 2313a).

10. The electronic device (810, 2300a) of claim 9, wherein the processor is further configured to invoke a framework application programming interface, API, to request the secure component (813) to set the ranging data set, and
wherein the framework API comprises an application ID for identifying an application invoking the framework API.

11. The electronic device (810, 2300a) of claim 9, wherein the processor is further configured to invoke a framework API to request the secure component (812) to transfer the ranging data set to the UWB subsystem (812, 2313a), and
wherein the framework API comprises an application ID for identifying an application invoking the framework API.

12. The electronic device (810, 2300a) of claim 9, wherein the ranging data set comprises at least one of session ID information for a UWB session associated with the secure ranging and session key information for protecting the UWB session.

13. The electronic device (810, 2300a) of claim 9, wherein the processor is further configured to transmit a command to start the secure ranging to the UWB subsystem (812, 2313a), and
wherein the command to start the secure ranging comprises an application ID for identifying an application associated with the secure ranging.

14. The electronic device (810, 2300a) of claim 9, wherein the second secure channel between the secure component (813) and the UWB subsystem (812, 2313a) is an asymmetric key-based secure channel.

15. The electronic device (810, 2300a) of claim 9, wherein the secure component (813) is a trusted execution environment, TEE, (2310a) or a Strongbox.

## Patentansprüche

1. Verfahren einer elektronischen Vorrichtung (810, 2300a) zum Durchführen einer sicheren Entfernungsmessung mit einer externen elektronischen Vorrichtung (820, 2300b), wobei das Verfahren Folgendes umfasst:
Übertragen, von einem Framework (811, 2320a) der elektronischen Vorrichtung (810, 2300a) an eine sichere Komponente (813) der elektronischen Vorrichtung (810, 2300a), einer Anforderung zum Einstellen eines Entfernungsmessungsdatensatzes für die sichere Entfernungsmessung, wobei das Einstellen des Entfernungsmessungsdatensatzes auf UWB-Parametern basiert, die über einen eingerichteten ersten sicheren Kanal zwischen der elektronischen Vorrichtung (810, 2300a) und der externen elektronischen Vorrichtung (820, 2300b) ausgetauscht werden;
Übertragen, von dem Framework (811, 2320a) an die sichere Komponente (813), einer Anforderung zum Übermitteln des Entfernungsmessungsdatensatzes an ein Ultrabreitbandteilsystem, UWB-Teilsystem, (812, 2313a) der elektronischen Vorrichtung (810, 2300a); und
Übermitteln des Entfernungsmessungsdatensatzes von der sicheren Komponente (813) an das UWB-Teilsystem (812, 2313a) unter Verwendung eines zweiten sicheren Kanals, der zwischen der sicheren Komponente und dem UWB-Teilsystem (812, 2313a) eingerichtet ist.

2. Verfahren nach Anspruch 1,
wobei das Übertragen der Anforderung zum Einstellen des Entfernungsmessungsdatensatzes Aufrufen einer Framework-Anwendungsprogrammierschnittstelle, Framework-API, umfasst, um anzufordern, dass die sichere Komponente (813) den Entfernungsmessungsdatensatz einstellt, wobei die Framework-API eine Anwendungs-ID zum Identifizieren einer Anwendung umfasst, die die Framework-API aufruft.

3. Verfahren nach Anspruch 1, wobei das Übertragen der Anforderung zum Übermitteln des Entfernungsmessungsdatensatzes an das UWB-Teilsystem (812, 2313a) Aufrufen einer Framework-API umfasst, um anzufordern, dass die sichere Komponente (813) den Entfernungsmessungsdatensatz an das UWB-Teilsystem (812, 2313a) übermittelt, wobei die Framework-API eine Anwendungs-ID zum Identifizieren einer Anwendung einschließt, die die Framework-API aufruft.

4. Verfahren nach Anspruch 1, wobei das Übertragen der Anforderung zum Übermitteln des Entfernungsmessungsdatensatzes an das UWB-Teilsystem (812, 2313a) Übermitteln eines Befehls, den Entfernungsmessungsdatensatz von der sicheren Komponente zu erlangen, von einer Anwendung, die der sicheren Entfernungsmessung zugeordnet ist, an das UWB-Teilsystem (812, 2313a) umfasst.

5. Verfahren nach Anspruch 1, wobei der Entfernungsmessungsdatensatz mindestens eines von Sitzungs-ID-Informationen für eine UWB-Sitzung, die der sicheren Entfernungsmessung zugeordnet sind, und Sitzungsschlüsselinformationen zum Schützen der UWB-Sitzung umfasst.

6. Verfahren nach Anspruch 1, ferner umfassend Übertragen eines Befehls, die sichere Entfernungsmessung zu starten, durch das Framework (811, 2320a) an das UWB-Teilsystem (812, 2313a), wobei der Befehl, die sichere Entfernungsmessung zu starten, eine Anwendungs-ID zum Identifizieren einer Anwendung umfasst, die der sicheren Entfernungsmessung zugeordnet ist.

7. Verfahren nach Anspruch 1, wobei der zweite sichere Kanal zwischen der sicheren Komponente (813) und dem UWB-Teilsystem (812, 2313a) ein asymmetrischer schlüsselbasierter sicherer Kanal ist.

8. Verfahren nach Anspruch 1, wobei die sichere Komponente (813) eine vertrauenswürdige Ausführungsumgebung, TEE, (2310a) oder eine Strongbox ist.

9. Elektronische Vorrichtung (810, 2300a) zum Durchführen einer sicheren Entfernungsmessung mit einer externen elektronischen Vorrichtung (820, 2300b), umfassend:
einen Speicher; und
einen Prozessor, der mit dem Speicher verbunden ist, wobei der Prozessor zu Folgendem konfiguriert ist:
Übertragen, von einem Framework (811, 2320a) der elektronischen Vorrichtung (810, 2300a) an eine sichere Komponente (813) der elektronischen Vorrichtung (810, 2300a), einer Anforderung zum Einstellen eines Entfernungsmessungsdatensatzes für die sichere Entfernungsmessung, wobei das Einstellen des Entfernungsmessungsdatensatzes auf UWB-Parametern basiert, die über einen eingerichteten ersten sicheren Kanal zwischen der elektronischen Vorrichtung (810, 2300a) und der externen elektronischen Vorrichtung (820, 2300b) ausgetauscht werden;
Übertragen, von dem Framework (811, 2320a) an die sichere Komponente (813), einer Anforderung zum Übermitteln des Entfernungsmessungsdatensatzes an ein Ultrabreitbandteilsystem, UWB-Teilsystem, (812, 2313a) der elektronischen Vorrichtung (810, 2300a); und
Übermitteln des Entfernungsmessungsdatensatzes von der sicheren Komponente (813) an das UWB-Teilsystem (812, 2313a) unter Verwendung eines zweiten sicheren Kanals, der zwischen der sicheren Komponente (813) und dem UWB-Teilsystem (812, 2313a) eingerichtet ist.

10. Elektronische Vorrichtung (810, 2300a) nach Anspruch 9, wobei der Prozessor ferner dazu konfiguriert ist, eine Framework-Anwendungsprogrammierschnittstelle, Framework-API, aufzurufen, um anzufordern, dass die sichere Komponente (813) den Entfernungsmessungsdatensatz einstellt, und
wobei die Framework-API eine Anwendungs-ID zum Identifizieren einer Anwendung umfasst, die die Framework-API aufruft.

11. Elektronische Vorrichtung (810, 2300a) nach Anspruch 9, wobei der Prozessor ferner dazu konfiguriert ist, eine Framework-API aufzurufen, um anzufordern, dass die sichere Komponente (812) den Entfernungsmessungsdatensatz an das UWB-Teilsystem (812, 2313a) übermittelt, und
wobei die Framework-API eine Anwendungs-ID zum Identifizieren einer Anwendung umfasst, die die Framework-API aufruft.

12. Elektronische Vorrichtung (810, 2300a) nach Anspruch 9, wobei der Entfernungsmessungsdatensatz mindestens eines von Sitzungs-ID-Informationen für eine UWB-Sitzung, die der sicheren Entfernungsmessung zugeordnet sind, und Sitzungsschlüsselinformationen zum Schützen der UWB-Sitzung umfasst.

13. Elektronische Vorrichtung (810, 2300a) nach Anspruch 9, wobei der Prozessor ferner dazu konfiguriert ist, einen Befehl, die sichere Entfernungsmessung zu starten, an das UWB-Teilsystem (812, 2313a) zu übertragen, und
wobei der Befehl, die sichere Entfernungsmessung zu starten, eine Anwendungs-ID zum Identifizieren einer Anwendung umfasst, die der sicheren Entfernungsmessung zugeordnet ist.

14. Elektronische Vorrichtung (810, 2300a) nach Anspruch 9, wobei der zweite sichere Kanal zwischen der sicheren Komponente (813) und dem UWB-Teilsystem (812, 2313a) ein asymmetrischer schlüsselbasierter sicherer Kanal ist.

15. Elektronische Vorrichtung (810, 2300a) nach Anspruch 9, wobei die sichere Komponente (813) eine vertrauenswürdige Ausführungsumgebung, TEE, (2310a) oder eine Strongbox ist.

## Revendications

1. Procédé d'un dispositif électronique (810, 2300a) pour réaliser une télémétrie sécurisée avec un dispositif électronique externe (820, 2300b), le procédé comprenant :
la transmission, à partir d'un cadre (811, 2320a) du dispositif électronique (810, 2300a) vers un composant sécurisé (813) du dispositif électronique (810, 2300a), d'une demande de définition d'un ensemble de données de télémétrie pour la télémétrie sécurisée, dans lequel la définition de l'ensemble de données de télémétrie est sur la base de paramètres UWB qui sont échangés par l'intermédiaire d'un premier canal sécurisé établi entre le dispositif électronique (810, 2300a) et le dispositif électronique externe (820, 2300b) ;
la transmission, à partir du cadre (811, 2320a) vers le composant sécurisé (813), d'une demande de transfert de l'ensemble de données de télémétrie vers un sous-système à bande ultra-large, UWB (812, 2313a) du dispositif électronique (810, 2300a) ; et
le transfert de l'ensemble de données de télémétrie, à partir du composant sécurisé (813) vers le sous-système UWB (812, 2313a), à l'aide d'un second canal sécurisé établi entre le composant sécurisé et le sous-système UWB (812, 2313a).

2. Procédé de la revendication 1,
dans lequel la transmission de la demande pour définir l'ensemble de données de télémétrie comprend l'appel d'une interface de programmation d'application, API, de cadre pour demander au composant sécurisé (813) de définir l'ensemble de données de télémétrie, dans lequel l'API de cadre comprend un ID d'application en vue d'identifier une application appelant l'API de cadre.

3. Procédé de la revendication 1, dans lequel la transmission de la demande de transfert de l'ensemble de données de télémétrie vers le sous-système UWB (812, 2313a) comprend l'appel d'une API de cadre pour demander au composant sécurisé (813) de transférer l'ensemble de données de télémétrie vers le sous-système UWB (812, 2313a), dans lequel l'API de cadre comprend un ID d'application en vue d'identifier une application appelant l'API de cadre.

4. Procédé de la revendication 1, dans lequel la transmission de la demande de transfert de l'ensemble de données de télémétrie vers le sous-système UWB (812, 2313a) comprend le transfert, à partir d'une application associée à la télémétrie sécurisée vers le sous-système UWB (812, 2313a), d'une commande pour obtenir l'ensemble de données de télémétrie à partir du composant sécurisé.

5. Procédé de la revendication 1, dans lequel l'ensemble de données de télémétrie comprend au moins l'une parmi des informations d'identification de session pour une session UWB associée à la télémétrie sécurisée et des informations de clé de session en vue de protéger la session UWB.

6. Procédé de la revendication 1, comprenant en outre la transmission, par le cadre (811, 2320a), d'une commande pour démarrer la télémétrie sécurisée vers le sous-système UWB (812, 2313a), dans lequel la commande pour démarrer la télémétrie sécurisée comprend un ID d'application en vue d'identifier une application associée à la télémétrie sécurisée.

7. Procédé de la revendication 1, dans lequel le second canal sécurisé entre le composant sécurisé (813) et le sous-système UWB (812, 2313a) est un canal sécurisé à base de clé asymétrique.

8. Procédé de la revendication 1, dans lequel le composant sécurisé (813) est un environnement d'exécution de confiance, TEE, (2310a) ou une Strongbox.

9. Dispositif électronique (810, 2300a) en vue de réaliser une télémétrie sécurisée avec un dispositif électronique externe (820, 2300b), comprenant :
une mémoire ; et
un processeur connecté à la mémoire, le processeur étant configuré pour :
transmettre, à partir d'un cadre (811, 2320a) du dispositif électronique (810, 2300a) vers un composant sécurisé (813) du dispositif électronique (810, 2300a), une demande de définition d'un ensemble de données de télémétrie pour la télémétrie sécurisée, dans lequel la définition de l'ensemble de données de télémétrie est sur la base de paramètres UWB qui sont échangés par l'intermédiaire d'un premier canal sécurisé établi entre le dispositif électronique (810, 2300a) et le dispositif électronique externe (820, 2300b) ;
transmettre, à partir du cadre (811, 2320a) vers le composant sécurisé (813), une demande de transfert de l'ensemble de données de télémétrie vers un sous-système à bande ultra-large, UWB (812, 2313a) du dispositif électronique (810, 2300a) ; et
transférer l'ensemble de données de télémétrie, à partir du composant sécurisé (813) vers le sous-système UWB (812, 2313a), à l'aide d'un second canal sécurisé établi entre le composant sécurisé (813) et le sous-système UWB (812, 2313a).

10. Dispositif électronique (810, 2300a) de la revendication 9, dans lequel le processeur est en outre configuré pour appeler une interface de programmation d'application, API, de cadre pour demander au composant sécurisé (813) de définir l'ensemble de données de télémétrie, et
dans lequel l'API de cadre comprend un ID d'application en vue d'identifier une application appelant l'API de cadre.

11. Dispositif électronique (810, 2300a) de la revendication 9, dans lequel le processeur est en outre configuré pour appeler une API de cadre pour demander au composant sécurisé (812) de transférer l'ensemble de données de télémétrie vers le sous-système UWB (812, 2313a), et
dans lequel l'API de cadre comprend un ID d'application en vue d'identifier une application appelant l'API de cadre.

12. Dispositif électronique (810, 2300a) de la revendication 9, dans lequel l'ensemble de données de télémétrie comprend au moins l'une parmi des informations d'identification de session pour une session UWB associée à la télémétrie sécurisée et des informations de clé de session en vue de protéger la session UWB.

13. Dispositif électronique (810, 2300a) de la revendication 9, dans lequel le processeur est en outre configuré pour transmettre une commande pour démarrer la télémétrie sécurisée vers le sous-système UWB (812, 2313a), et
dans lequel la commande pour démarrer la télémétrie sécurisée comprend un ID d'application en vue d'identifier une application associée à la télémétrie sécurisée.

14. Dispositif électronique (810, 2300a) de la revendication 9, dans lequel le second canal sécurisé entre le composant sécurisé (813) et le sous-système UWB (812, 2313a) est un canal sécurisé à base de clé asymétrique.

15. Dispositif électronique (810, 2300a) de la revendication 9, dans lequel le composant sécurisé (813) est un environnement d'exécution de confiance, TEE, (2310a) ou une Strongbox.
